(19) **Europäisches Patentamt**
**European Patent Office**
**Office européen des brevets**

(11) Veröffentlichungsnummer : **0 351 369 B1**

# (12) EUROPÄISCHE PATENTSCHRIFT

(45) Veröffentlichungstag der Patentschrift :
11.09.91 Patentblatt 91/37

(51) Int. Cl.⁵ : **B60J 10/02, E06B 3/56,**
**E06B 3/62, C09J 5/00**

(21) Anmeldenummer : **89810517.6**

(22) Anmeldetag : **07.07.89**

(54) Vorgefertigte Fahrzeugscheibe für die Direktverglasung und Verwendung der Fahrzeugscheibe als montagefertiges Bauteil.

(30) Priorität : 15.07.88 CH 2720/88

(43) Veröffentlichungstag der Anmeldung :
17.01.90 Patentblatt 90/03

(45) Bekanntmachung des Hinweises auf die
Patenterteilung :
11.09.91 Patentblatt 91/37

(84) Benannte Vertragsstaaten :
AT BE CH DE ES FR GB GR IT LI LU NL SE

(56) Entgegenhaltungen :
DE-A- 3 409 960
FR-A- 2 369 407
GB-A- 2 086 465
US-A- 3 061 895
US-A- 3 280 523
US-A- 3 440 121
US-A- 4 352 584

(73) Patentinhaber : Gurit-Essex AG
CH-8807 Freienbach (CH)

(72) Erfinder : Schreiber, Herbert
Seeblick 3
CH-8832 Wollerau (CH)
Erfinder : Saur, Wolfgang, Dr.
Tafletenstrasse 5
CH-8863 Buttikon (CH)

(74) Vertreter : Rottmann, Maximilian R. et al
c/o Rottmann, Zimmermann + Partner AG
Glattalstrasse 37
CH-8052 Zürich (CH)

## Beschreibung

Die vorliegende Erfindung bezieht sich auf eine vorgefertigte Fahrzeugscheibe nach dem Oberbegriff des Patentanspruches 1 und auf eine Verwendung dieser Fahrzeugscheibe als montagefertiges Bauteil nach dem Patentanspruch 53.

Gegenüber der konventionellen Verglasungstechnik, bei welcher ein Doppel-U-Profil aus Gummi oder einem ähnlich elastischen Material Verwendung findet, das einerseits die Scheibenkante und andererseits eine Rahmenkante, einen Flansch an einer Fahrzeugkarosserie oder dgl. formschlüssig umfasst und dabei die Scheibe in der vorgesehenen Montageposition hält, findet zunehmend die sogenannte Direktverglasung Anwendung, bei der die Scheibe in den Rahmen, an einen Flansch einer Karosserie oder dgl. angeklebt wird. Die bekannten, dabei zur Anwendung kommenden Verfahren lassen sich generell in drei Klassen einteilen :

1. Verfahren, in denen die Scheibe entlang ihres Randes, wo sie eingeklebt werden soll, gegebenenfalls mit einer UV- und lichtundurchlässigen Schicht und gegebenenfalls mit einem Primer beschichtet, sonst aber unvorbereitet angeliefert wird. Dabei wird der Montagekleber unmittelbar vor Ort aufgebracht und die Scheibe eingeklebt.

2. Verfahren, in denen die Scheibe in von der Montagestrasse getrennten Anlagen, ebenfalls wieder gegebenenfalls über einer oder mehreren Zwischenschichten, mit einem ersten Kleberstrang versehen wird, der dann ausreagiert wird. Dabei wird der eigentliche Montagekleber wiederum unmittelbar vor Ort aufgebracht.

3. Verfahren, in denen die Scheibe zeitlich und örtlich unabhangig vollstandig zum Einkleben vorbereitet wird, indem die für die Verklebung erforderliche Kleberaupe, bestehend aus einem feuchtigkeitshärtenden Polyurethankleber, entlang des Randes der Scheibe aufgebracht und die Scheibe zur Zwischenlagerung bzw. zum Transport derart luftdicht in Folien verpackt wird, dass der aufgetragene Kleber nicht aushärten kann.

Die genannten Verfahren stellen aber noch keine optimale Lösung dar, da sie vor Ort, d.h. zum Beispiel an der Montagestrasse für ein Automobil, immer noch mehr oder weniger aufwendige Arbeiten erfordern : Aufbringen und gegebenenfalls Aktivieren der Verklebemasse mit allen Vor- und Zubereitungsmassnahmen dafür, oder allenfalls Entfernen einer grossflächigen und aufwendigen Verpackung der Scheiben unter Schonung der schon aufgebrachten Verklebemassen.

Die vorliegende Erfindung befasst sich im weitesten Sinne mit einer Verbesserung eines Verfahrens der 3. Klasse bzw. einer Scheibe, die für ein solches Verfahren geeignet ist.

Ein der vorgenannten 1. Klasse zuzuordnendes Verfahren ist z.B. aus der DE-A-2730831 bekannt und braucht an dieser Stelle nicht näher diskutiert zu werden. Die Nachteile der Verfahren der vorgenannten 1. Klasse sind hinlänglich bekannt ; hervorzuheben ist insbesondere die eventuell erforderliche, neuerliche Reinigung des mit der Klebemasse zu beschichtenden Randbereiches, das zeitaufwendige und mit grösster Präzision zu erfolgende Auftragen der Kleberraupe und die im allgemeinen kurze, vom Vorschubtakt des Montagebandes direkt abhängige Zeit, die zur Ausführung dieser Arbeiten zur Verfügung steht.

Das Verfahren gemäss der DE-A-3409960 betrifft das Einkleben von Fahrzeugscheiben in Karosserien mittels Einbringen des Verklebemittels an der Montagestrasse, gehört also zur zweiten der oben definierten Klassen. Gemäss dieser Schrift wird der Kleberstrang in Form von zwei miteinander kompatiblen Teilsträngen in zwei zeitlich getrennten Phasen aufgebracht, indem in der ersten Phase ein Teilstrang mit profiliertem Querschnitt, gegebenenfalls unter Zwischenschaltung einer oder mehrerer Haftvermittlerschichten, auf den Randbereich der Glasscheibe aufgebracht und ausgehärtet wird, so dass er in der zweiten Phase, im Zeitpunkt des Aufbringens des zweiten Teilstrangs, einen nicht mehr plastisch verformbaren Zwischenkörper zwischen der Glasscheibe und dem zweiten Teilstrang bildet.

Der erste Teilstrang wird mit Hilfe einer kalibrierten Düse so auf den Randbereich der Glasscheibe aufgebracht, dass der Teilstrang ein im wesentlichen L-förmiges oder U-förmiges, offenes Querschnittsprofil mit einem an der der Sichtfläche der Glasscheibe zugewandten Seite angeordneten, auf den Befestigungsflansch des Fensterrahmens hin gerichteten Begrenzungssteg für den zweiten Teilstrang aufweist.

Während der auf der Glasscheibe angeordnete, erste Teilstrang bei der Montage der Glasscheibe bereits ausgehärtet ist, wird der zweite Teilstrang am Montageband unmittelbar vor dem Einbau der Glasscheibe auf den Basisteil des ersten Teilstrangs bzw. in den Kanal des ausgehärteten, U-förmig profilierten Teilstrangs hinein oder auf den Befestigungsflansch extrudiert. Beim Andrücken der Glasscheibe gegen den Befestigungsflansch füllt der frisch extrudierte zweite Teilstrang den Kanal des ersten Teilstrangs aus, wobei der innere Begrenzungssteg des ausgehärteten Teilstrangs verhindert, dass die noch weiche, frisch extrudierte Klebermasse des zweiten Teilstrangs seitlich, in Richtung auf das Sichtfeld der Glasscheibe hin, herausgedrückt wird.

Zwar lässt sich bei einem Vorgehen nach der vorstehend diskutierten Schrift eine gewisse Vereinfachung beim Auftragen des zweiten Kleberstranges, des eigentlichen Montageklebers, erzielen, doch sind die im Zusammenhang mit dem Vorgehen nach der Lehre der 1. Klasse erläuterten Nachteile in gewissem Masse nach wie vor vorhanden.

Die einzige der Anmelderin bekannte Veröffentlichung aus der dritten der oben definierten Klassen, d.h. der Verfahren mit externer, vollständiger Vorbereitung der Fahrzeugscheibe zum Verkleben ist die DE-A-3638449. Danach erfolgt der Auftrag eines unter Einfluss der Luftfeuchtigkeit härtenden Klebstoffes auf die Scheibe zeitlich und örtlich unabhängig von dem mit der Scheibe zu verklebenden Fahrzeug. Der Klebstoff wird dabei während oder sofort nach seinem Auftrag auf die Scheibe bis kurz vor dem vorgesehenen Einkleben der Scheibe in ein Fahrzeug durch eine Kombination von einer Überlagerung eines trockenen Schutzgases mit einem chemischen Trockungsmittel und/oder einer physikalischen Trocknung vor jeglicher Feuchtigkeitseinwirkung geschützt.

Die mit dem Klebstoff versehene Scheibe wird dann in einer feuchtigkeitsfreien Umgebung in Einer- oder Mehrereinheiten derart verpackt, dass beim späteren Transport und Lagern dieser Scheiben ein Feuchtigkeitszutritt zum Klebstoff ausgeschlossen ist.

Die Scheibe kann zwischen luftdichten Folien so eingeschweisst werden, dass die Folien vom Klebstoff einen lichten Abstand aufweisen ; die in der Scheibenverpackung eingeschlossene Luft wird dann evakuiert, worauf die Scheibenverpackung mit Schutzgas gefüllt wird. Der Druck auf die Scheibe und den Kleber kann dann dem atmosphärischen Umgebungsdruck entsprechen, so dass sich auch weiche Teile der Verpackung nicht verformen. Es können aber auch vakuumgeformte harte Folien Verwendung finden.

Am Einbauplatz muss die noch verpackte Scheibe belüftet werden, so dass sich die Folie abziehen lässt. Um dies zu erleichtern, kann die Scheibenverpackung mit Mitteln zur späteren Belüftung der Verpackung versehen werden ; beispielsweise können geeignete Belüftungskanülen eingelegt werden. Die Belüftung kann unter Verdrängung des Schutzgases, z.B. mit hoher Luftfeuchtigkeit, durchgeführt werden, um dadurch die Aushärtung des Klebstoffes schneller einzuleiten.

Wesentlich ist somit, dass die Scheibe örtlich und zeitlich vom Montageband bzw. dem zu reparierenden Fahrzeug getrennt mit Cleanem, Primern und Klebstoff fertig vorbereitet und der Klebstoff vollkommen vor Feuchtigkeit geschützt wird.

Zwar befreit ein Vorgehen nach der Lehre der vorstehend diskutierten DE-A-3638449 von der Notwendigkeit, vor Ort, z.B. am Montageband, den eigentlichen Montagekleber aufzubringen. Andererseits tritt nachteilig in Erscheinung, dass die dergestalt vorbereitete Scheibe vor der Montage umständlich, üblicherweise unter Zwischenschaltung eines zusätzlichen Belüftungsvorganges der Verpackung, ausgepackt und das vergleichsweise voluminöse Verpackungsmaterial entsorgt werden muss. Ferner ist jener Patentanmeldung keine Anweisung zu entnehmen, wie ein unbeabsichtigtes und sehr unerwünschtes Heraustreten der plastisch verformbaren Klebemasse über den Scheibenrand hinaus und/oder in den Sichtbereich der Scheibe hinein vermieden werden soll.

Es ist die Aufgabe der vorliegenden Erfindung, eine Fahrzeugscheibe der im Oberbegriff des Patentanspruches 1 definierten Art so weiterzubilden, dass die Scheibe vor Ort, z.B. am Montageband, als einbaufertiges Bauteil zur Verfügung steht, namentlich unter Vermeidung der Notwendigkeit, unmittelbar vor der Montage einen Montagekleber aufbringen zu müssen, und dass das Bereitstellen und Einkleben der angelieferten Scheibe rasch und problemlos, namentlich ohne Entsorgung von umfangreichen Verpackungsmaterial, erfolgen kann.

Gemäss der Erfindung wird diese Aufgabe bei einer gattungsgemässen Fahrzeugscheibe durch die im kennzeichnenden Teil des Patentanspruchs 1 definierten Merkmale gelöst.

Beim Anliefern der derart vorbereiteten Scheibe braucht somit, je nach Art der verwendeten Klebersubstanz, unter Umständen lediglich das Material des zweiten Kleberteilstranges aktiviert und die Scheibe eingesetzt zu werden. Dabei wird zum Beispiel ein Teilbereich des ersten Kleberteilstranges oder ein Verdrängungskörper in den Hohlraum, in dem sich der plastische zweite Kleberteilstrang befindet, hineingedrückt und dieser presst seinerseits das Material des letzteren zumindest teilweise aus diesem Hohlraum heraus und in den Bereich des Rahmens, Flansches oder dgl., mit dem die Scheibe verklebt werden soll. Bis zum Moment des Einsetzens der Scheibe ist der zweite Kleberteilstrang, der eigentliche Montagekleber, weitgehend vor äusseren Einflüssen wie Luftfeuchtigkeit, Licht bzw. UV-Strahlung, Verschmutzung usw. geschützt. Vor dem Einbau der Scheibe müssen keine Verpackungsmaterialien von dieser entfernt und nachträglich entsorgt werden.

Bevorzugte Ausführungsformen der Erfindung und Weiterbildungen des Erfindungsgegenstandes sind in den abhängigen Ansprüchen 2 bis 52 umschrieben.

Im folgenden werden einige Ausführungsbeispiele des Erfindungsgegenstandes, mit Bezugnahme auf die beiliegenden Zeichnungen, näher erläutert. In den Zeichnungen zeigen :

| Fig. 1 | als erstes Ausführungsbeispiel des Erfindungsgegenstandes einen Teilquerschnitt durch den Randbereich einer Fahrzeugscheibe in uneingebautem Zustand ; |
| Fig. 2 | eine Darstellung gemäss Fig. 1, aber in eingebautem Zustand ; |
| Fig. 3 | als zweites Ausführungsbeispiel des Erfindungsgegenstandes einen Teilquerschnitt durch den Randbereich einer Fahrzeugscheibe in uneingebautem Zustand ; |
| Fig. 4 | eine Darstellung gemäss Fig. 3, aber in eingebautem Zustand ; |
| Fig. 5 | als drittes Ausführungsbeispiel des Erfindungsgegenstandes einen Teilquerschnitt durch den Randbereich einer Fahrzeugscheibe in uneingebautem Zustand ; |
| Fig. 6 | eine Darstellung gemäss Fig. 5, aber in eingebautem Zustand ; |
| Fig. 7 | als viertes Ausführungsbeispiel des Erfindungsgegenstandes einen Teilquerschnitt durch den Randbereich einer Fahrzeugscheibe in uneingebautem Zustand ; |
| Fig. 8 | eine Darstellung gemäss Fig. 7, aber in eingebautem Zustand ; |
| Fig. 9 | als fünftes Ausführungsbeispiel des Erfindungsgegenstandes einen Teilquerschnitt durch den Randbereich einer Fahrzeugscheibe in uneingebautem Zustand ; |
| Fig. 10 | eine Darstellung gemäss Fig. 9, aber in eingebautem Zustand ; |
| Fig. 11 | als sechstes Ausführungsbeispiel des Erfindungsgegenstandes einen Teilquerschnitt durch den Randbereich einer Fahrzeugscheibe in uneingebautem Zustand ; |
| Fig. 12 | eine Darstellung gemäss Fig. 11, aber in eingebautem Zustand ; |
| Fig. 13 | als siebtes Ausführungsbeispiel des Erfindungsgegenstandes einen Teilquerschnitt durch den Randbereich einer Fahrzeugscheibe in uneingebautem Zustand ; |
| Fig. 14 | eine Darstellung gemäss Fig. 13, aber in eingebautem Zustand ; |
| Fig. 15 | als achtes Ausführungsbeispiel des Erfindungsgegenstandes einen Teilquerschnitt durch den Randbereich einer Fahrzeugscheibe in uneingebautem Zustand ; |
| Fig. 16 | eine Darstellung gemäss Fig. 15, aber in eingebautem Zustand ; |
| Fig. 17 | als neuntes Ausführungsbeispiel des Erfindungsgegenstandes einen Teilquerschnitt durch den Randbereich einer Fahrzeugscheibe in uneingebautem Zustand ; |
| Fig. 18 | eine Darstellung gemäss Fig. 17, aber in eingebautem Zustand ; |
| Fig. 19 | als zehntes Ausführungsbeispiel des Erfindungsgegenstandes einen Teilquerschnitt durch den Randbereich einer Fahrzeugscheibe in uneingebautem Zustand ; und |
| Fig. 20 | eine Darstellung gemäss Fig. 19, in eingebautem Zustand, nach der Aktivierung des Verdrängungskörpers. |

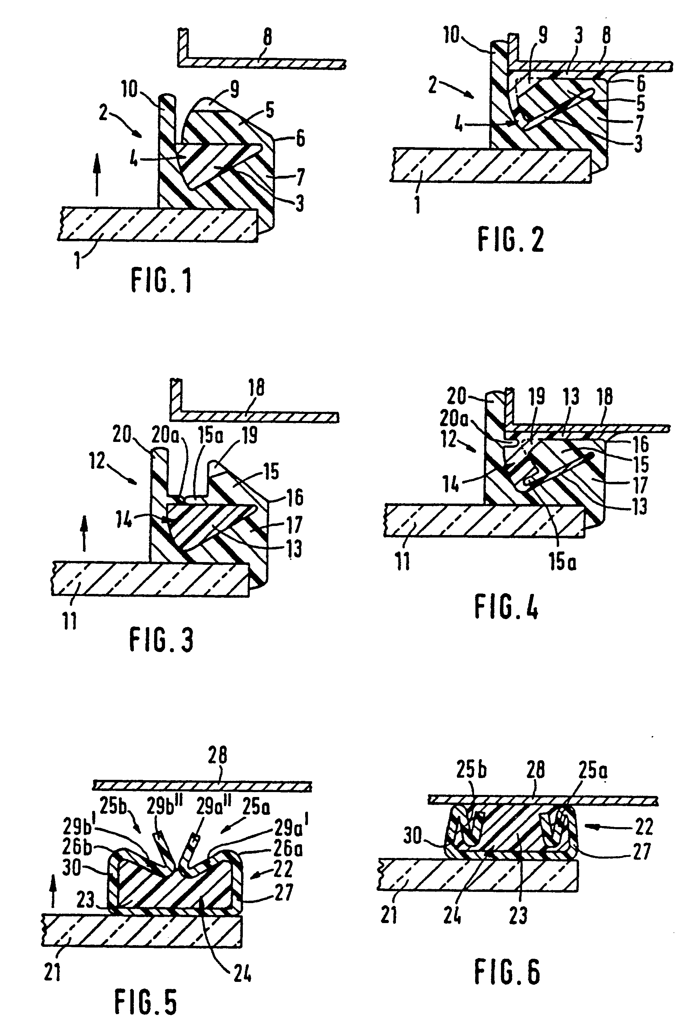

In der Fig. 1 ist ausschnittweise ein Randbereich einer vorgefertigten, zum Einbau vorbereitete Scheibe 1 dargestellt. Es soll an dieser Stelle darauf hingewiesen werden, dass der Einfachheit halber in sämtlichen Zeichnungsfiguren lediglich eine einschichtige Scheibe gezeichnet ist ; es versteht sich aber, dass die Erfindung nicht auf diese Art von Scheiben beschränkt ist. Vielmehr können, wie heute im Fahrzeugbau allgemein üblich, auch Verbundglasscheiben verwendet werden.

Die Scheibe 1 ist entlang ihres Randes mit einem profilierten Kleberteilstrang versehen, der generell mit 2 bezeichnet ist. Dieser besteht zum Beispiel aus einer ausgehärteten Polyurethan-Klebedichtungsmasse, welche gegebenenfalls unter Zwischenschaltung einer (nicht dargestellten) Primerschicht auf der Scheibe 1 haftet. Der Kleberteilstrang 2 befindet sich in ausreagiertem Zustand und ist bezüglich des Materials so gewählt, dass er bis zu einem gewissen Grad elastisch, nicht jedoch plastisch verformbar ist.

Der erste, profilierte Kleberteilstrang 2 begrenzt im weitesten Sinne, im Ruhezustand, d.h. bei nicht eingebauter Scheibe, einen Hohlraum, der zur Aufnahme eines zweiten Kleberteilstranges 3 bestimmt ist. Dieser zweite Kleberteilstrang 3 ist jedenfalls noch plastisch verformbar und/oder, je nach gewähltem Material, gegebenenfalls aktivierbar, um als eigentlicher Montagekleber zu dienen. Wesentlich ist jedenfalls, dass die Materialien einerseits des ersten Kleberteilstranges 2 und andererseits des zweiten Kleberteilstranges 3 chemisch kompatibel sind.

Im Ausführungsbeispiel gemäss Fig. 1 begrenzt der erste Kleberteilstrang 2 eine etwa V-förmige Mulde 4, in welcher der zweite Kleberteilstrang 3 aufgenommen ist. Die Oberfläche der Mulde 4 und damit des zweiten Kleberteilstranges 3 ist durch einen Teilbereich 5 des ersten Kleberteilstranges 2 abgedeckt, der gemäss Fig. 1 im Querschnitt annähernd dreieckige Gestalt besitzt. Der Teilbereich 5 ist entlang der Oberkante 6 der einen Seitenwand 7 des ersten Kleberteilstranges 2 einstückig angeformt und unter elastischer Verformung im Bereich der Anlenklinie (Oberkante 6) in die Mulde 4 hineinbewegbar.

Der elastisch bewegliche Teilbereich 5 besitzt im Querschnitt im wesentlichen dreieckige Form, wobei die Spitze des Dreiecks über die genannte U- oder V-förmige Mulde 4 hinausragt. Die gegenüberliegende Basis des Dreiecks verschliesst dabei die genannte U- oder V-förmige Mulde 4 zumindest annähernd bzw. zum grössten Teil.

Wenn die Scheibe 1 mit vorbereiteten Kleberteilsträngen 2 und 3 an den Montageflansch 8 angepresst wird, bewegt sich der Teilbereich 5 in die Mulde 4 hinein und verdrängt den plastisch verformbaren, darin befindlichen, zweiten Kleberteilstrang 3 zumindest teilweise. Diese Situation ist in Fig. 2 dargestellt.

Um das Austreten des plastisch verformbaren, zweiten Kleberteilstranges 3 aus der Mulde 4 zu erleichtern, ist der elastisch bewegliche Teilbereich 5 des ersten Kleberteilstranges 2 an seiner gegen aussen gewandten Kante mit einer Mehrzahl von Einschnitten 9 versehen. Die Einschnitte 9 können die Gestalt von schlitzartigen Einfräsungen besitzen, die in etwa parallel zur Basis des im Querschnitt dreieckigen, den zweiten Kleberteilstrang abdeckenden Teilbereiches 5 verlaufen.

Vorzugsweise ist diejenige Wand 10 des den U-förmigen Hohlraum 4 begrenzenden Kleberteilstranges 2, die der mit dem elastisch verschwenkbaren Teilbereich 5 versehenen Wand 7 gegenüberliegt, höher ausgebildet. Dadurch ist erreicht, dass der plastische Kleberteilstrang 3 beim Auspressen aus dem Hohlraum 4 nicht in den Sichtbereich der Scheibe 1 austreten kann. Die Höhe der Seitenwand 10 kann dabei etwa der Höhe des elastisch verschwenkbaren Teilbereiches 5 entsprechen.

Eine zweite Ausführungsform des Erfindungsgegenstandes ist in den Fig. 3 und 4 dargestellt. Wiederum ist die Scheibe 11 mit einem ersten, profilierten Kleberteilstrang 12 versehen, der in seiner muldenartigen Vertiefung 14 einen zweiten, plastischen Kleberteilstrang 13 aufnimmt. Im Bestreben, den zweiten Kleberteilstrang 13 im Ruhezustand, d.h. bei nicht eingebauter Scheibe 11, so weit wie möglich abzudecken, besitzt der elastisch bewegliche Teilbereich 15 eine vorstehende Rippe 15a. Diese arbeitet mit einer weiteren Rippe 20a zusammen, die an derjenigen Seitenwand 20 des ersten Kleberteilstranges 12 vorgesehen ist, die dem elastisch bewegbaren Teilbereich 15 gegenüberliegt. Da das Material des ersten Kleberteilstranges 12 elastisch verformbar ist, lässt sich durch geeignete Dimensionierung eine nahezu vollkommene Abdichtung der muldenartigen Vertiefung 14 erreichen, die den zweiten Kleberteilstrang 13 aufhebt.

Analog wie beim ersten Ausführungsbeispiel wird der elastisch bewegbare Teilbereich 15 des ersten Kleberteilstranges 12 beim Einsetzen der Scheibe 11 in den Flansch 18 um die Oberkante 16 des ersten Kleberteilstranges 12 elastisch verschwenkt und in die muldenartige Vertiefung 14 hineingedrückt. Dadurch tritt der plastisch verformbare zweite Kleberteilstrang 13 aus der muldenartigen Vertiefung 14 aus und gewährleistet als eigentlicher Montagekleber die Verbindung zwischen Scheibe 11 und Flansch 18.

Um den Austritt des zweiten, plastischen Kleberteilstranges 13 aus der muldenartigen Vertiefung 14 zu erleichtern, ist der schwenkbare Teilbereich 15 des ersten Kleberteilstranges 12 wiederum mit schlitzartigen Einschnitten 19 versehen, wie es in Zusammenhang mit den Fig. 1 und 2 beschrieben worden ist.

Schliesslich kann, wiederum analog zum ersten Ausführungsbeispiel, die Wand 20, die der den elastisch verschwenkbaren Teilbereich 15 aufnehmenden Wand 17 gegenüberliegt, höher ausgebildet sein.

Ein weiteres Ausführungsbeispiel ist in den Fig. 5 und 6 dargestellt. In ähnlicher Weise wie zuvor beschrieben ist die Scheibe 21 mit einem ersten, profilierten Kleberteilstrang 22 versehen, der eine im Querschnitt etwa U-förmige, muldenartige Vertiefung 24 begrenzt. Diese Vertiefung 24 ist mit einem plastisch verformbaren, zweiten Kleberteilstrang 23 gefüllt. Die oberen Kanten 26a und 26b des ersten Kleberteilstranges 22 sind mit elastisch bewegbaren Teilbereichen 25a und 25b versehen, die die muldenartige Vertiefung 24, welche den als Montagekleber dienenden, plastisch verformbaren zweiten Kleberteilstrang 23 aufnimmt, im wesentlichen vollständig bedecken.

Die Vertiefung 24 ist durch zwei Seitenwände 27 und 30 begrenzt. Die an den oberen Kanten 26a und 26b elastisch angelenkten Teilbereiche 25a und 25b bestehen dabei aus ersten Abschnitten 29a' und 29b', welche den Hohlraum 24 zumindest annähernd vollständig bedecken, sowie aus daran anschliessenden Abschnitten 29a'' und 29b'', die über die Oberfläche des Hohlraumes 24 hervorstehen.

Wie aus Fig. 6 ersichtlich ist, werden die beiden elastisch bewegbaren Teilbereiche 25a und 25b beim Einsetzen der Scheibe 21 in den Flansch 28 dadurch weggebogen und in das Innere der muldenartigen Vertiefung 24 gepresst, dass die beiden vorstehenden Abschnitte 29a'' und 29b'' gegen die Oberfläche des Flansches 28 zur Anlage kommen, mit dem Resultat, dass der plastisch verformbare zweite Kleberteilstrang 23 zumindest teilweise aus der muldenartigen Vertiefung 24 austritt und zu einer innigen Verbindung zwischen Scheibe 21 und Flansch 28 beiträgt.

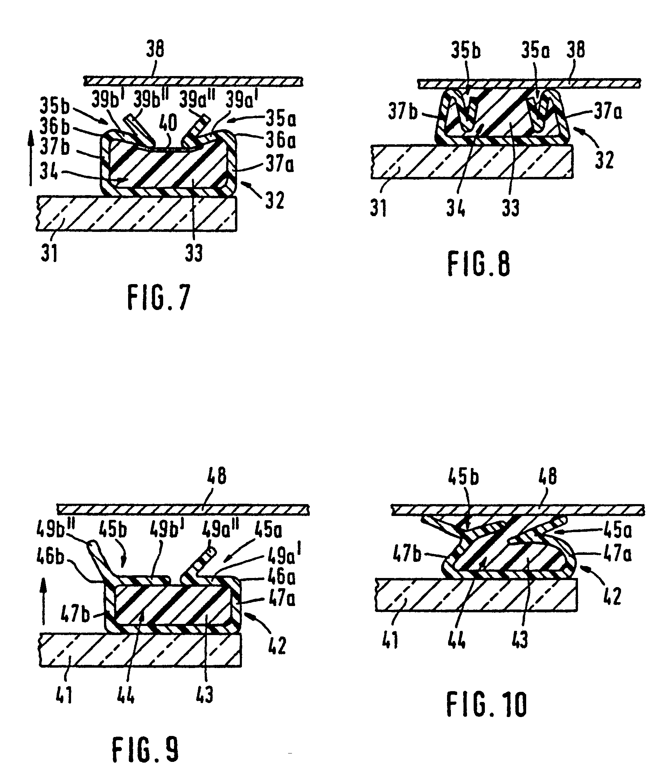

Das in den Fig. 7 und 8 dargestellte, vierte Ausführungsbeispiel des Erfindungsgegenstandes ist dem zuvor erläuterten, dritten Ausführungsbeispiel gemäss Fig. 5 und 6 sehr ähnlich. Wiederum ist die Scheibe 31 mit einem ersten, profilierten Kleberteilstrang 32 versehen, der eine muldenartige Vertiefung 34 begrenzt, in welcher ein plastisch verformbarer, als eigentlicher Montagekleber dienender, zweiter Kleberteilstrang 33 aufgenommen ist. Ebenfalls sind an den oberen Kanten 36a und 36b der beiden Seitenwände 37a und 37b des ersten Kleberteilstranges 32 elastisch verformbare Teilbereiche 35a und 35b vorgesehen. Sie umfassen wiederum an den Oberkanten 36a und 36b elastisch angelenkte, erste Abschnitte 39a' und 39b' sowie daran anschliessende, über die Oberfläche der muldenartigen Vertiefung herausragende Abschnitte 39a'' und 39b''. Die über

5

die Oberfläche der muldenartigen Vertiefung 34 hinausragenden Abschnitte 39a" und 39b" gelangen und beim Einsetzen der Scheibe 31 in den Flansch 38 in Anlage mit der Oberfläche des letzteren und bewirken, dass die Bereiche 36a und 36b elastisch bewegbar in die muldenartige Vertiefung 34 hineinpressbar sind.

Um einen optimalen Verschluss der den zweiten, plastisch verformbaren Kleberteilstrang aufnehmenden, muldenartigen Vertiefung 34 zu gewährleisten, sind die beiden sich über diese Vertiefung 34 zumindest teilweise erstreckenden elastischen Abschnitte 39a' und 39b' mittels einer Folie 40 miteinander verbunden. Dadurch kann erreicht werden, dass der plastisch verformbare, zweite Kleberteilstrang 33 weitgehend hermetisch verschlossen und dadurch vor jeglichen Umwelteinflüssen wie Luftfeuchtigkeit, UV-Strahlung, Verschmutzung und dergleichen geschützt ist.

Die Folie 40 besteht vorzugsweise aus einem mit den Materialien des ersten und des zweiten Kleberteilstranges 32 bzw. 33 kompatiblen Materials ; damit die Notwendigkeit entfällt, diese Folie beim Einsetzen der Scheibe 31 in den Flansch 38 zu entfernen, ist die Folie 40 zweckmässigerweise entweder derart dünn ausgebildet, dass sie beim hineindrücken der elastischen Teilbereiche 35a und 35b zerreisst, oder die Befestigung der Folie 40 an den elastischen Abschnitten 39a' und 39b' erfolgt derart haftend, dass diese Verbindung beim Hereinpressen der Teilbereiche 35a und 35b gelöst wird.

Wie aus Fig. 8 zu entnehmen ist, wird der plastisch verformbare, zweite Kleberteilstrang 33 beim Einsetzen der Scheibe 31 in den Flansch 38 zumindest teilweise aus der muldenartigen Vertiefung 34 herausgepresst, um eine innige Verbindung zwischen Scheibe 31 und Flansch 38 zu gewährleisten.

In den Fig. 9 und 10 ist ein fünftes Ausführungsbeispiel des Erfindungsgegenstandes dargestellt. Wiederum ist die Scheibe 41 mit einem ersten, profilierten Kleberteilstrang 42 versehen, der eine muldenartige Vertiefung 44 begrenzt, in welcher ein plastisch verformbarer, als eigentlicher Montagekleber dienender, zweiter Kleberteilstrang 43 aufgenommen ist. Ebenfalls sind an den oberen Kanten 46a und 46b der beiden Seitenwände 47a und 47b des ersten Kleberteilstranges 42 elastisch verformbare Teilbereiche 45a und 45b vorgesehen, die über die Oberfläche der muldenartigen Vertiefung 44 hinausragen und beim Einsetzen der Scheibe 41 in den Flansch 48 elastisch bewegbar sowie in die muldenartige Vertiefung 44 hineinpressbar sind.

Bei diesem Ausführunsgbeispiel ist der erste Kleberteilstrang 32 asymmetrisch ausgebildet : Die eine Seitenwand 47a ist, ähnlich wie bei den vorher beschriebenen Ausführungsbeispielen, mit einem ersten Abschnitt 49a' versehen, der elastisch um die Oberkante der Seitenwand 47a herum bewegbar ist. Daran anschliessend ist ein zweiter Abschnitt 49a" angeordnet, der über die muldenartige Vertiefung 44 herausragt. Die andere Seitenwand 47b ist einerseits mit einem ersten Abschnitt 49b' versehen, der elastisch um die Oberkante der Seitenwand 47b herum bewegbar ist, sowie mit einem ebenfalls im Bereich der Oberkante 46b der Seitenwand 47b befestigten, zweiten Abschnitt 49b", der auch über die Oberfläche der muldenartigen Vertiefung 44 herausragt.

Durch die asymmetrische Ausbildung des ersten Kleberteilstranges 42 wird, wie aus Fig. 10 ersichtlich ist, ein vergleichsweise breitflächiges Austreten des zweiten, plastisch verformbaren Kleberteilstranges 43 aus der muldenartigen Vertiefung 44 erreicht, wenn die Scheibe 41 in den Flansch 48 eingesetzt wird. Auch bei diesem Ausführungsbeispiel ist, wie aus Fig. 9 zu entnehmen ist, der zweite, als eigentlicher Montagekleber dienende Kleberteilstrang 43 weitgehend durch die elastischen Abschnitte 49a' und 49b' abgedeckt und somit vor Umwelteinflüssen geschützt.

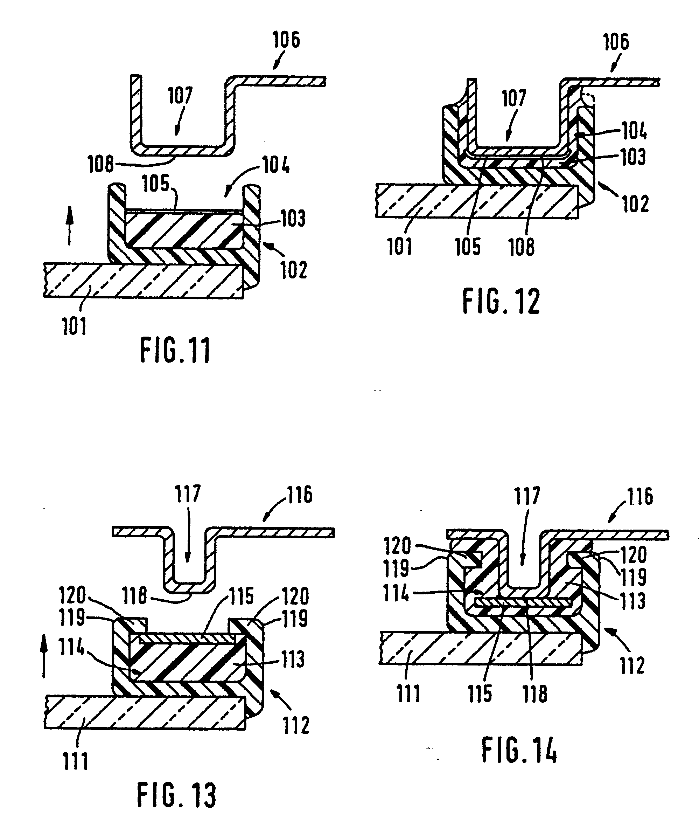

In der Fig. 11 ist ein weiteres Ausführungsbeispiel des Erfindungsgegenstandes dargestellt. Die Scheibe 101 gemäss Fig. 11 und 12 ist entlang ihres Randes mit einem profilierten Kleberteilstrang versehen, der generell mit 102 bezeichnet ist. Dieser besteht zum Beispiel aus einer ausgehärteten Polyurethan-Klebedichtungsmasse, welche gegebenenfalls unter Zwischenschaltung einer (nicht dargestellten) Primerschicht auf der Scheibe 101 haftet. Der Kleberteilstrang 102 befindet sich in ausreagiertem Zustand und ist bezüglich des Materials so gewählt, dass er bis zu einem gewissen Grad elastisch, nicht jedoch plastisch verformbar ist.

Der erste, profilierte Kleberteilstrang 102 begrenzt einen einseitig offenen Hohlraum, der zur Aufnahme eines zweiten Kleberteilstranges 103 bestimmt ist. Dieser zweite Kleberteilstrang 103 ist jedenfalls noch plastisch verformbar und/oder, je nach gewähltem Material, gegebenenfalls aktivierbar, um als eigentlicher Montagekleber zu dienen. Wesentlich ist jedenfalls, dass die Materialien einerseits des ersten Kleberteilstranges 102 und andererseits des zweiten Kleberteilstranges 103 chemisch kompatibel sind.

Im Ausführungsbeispiel gemäss Fig. 11 begrenzt der erste, profilierte Kleberteilstrang 102 eine im wesentlichen U-förmige Mulde 104, in welcher der zweite Kleberteilstrang 103 aufgenommen ist. Die freie Oberfläche des zweiten Kleberteilstranges 103 ist durch eine Folie 105 abgedeckt. Vorzugsweise ist die durch den ersten Kleberteilstrang 102 gebildete Mulde 104 nur teilweise mit dem zweiten Kleberteilstrang 103 gefüllt.

Die so vorbereitete Scheibe 101 ist in einen Rahmen, einen Flansch oder dgl. einzukleben ; im Beispielsfall ist der Rahmen generell mit 106 bezeichnet und besitzt einen U-förmigen Wulst 107, dessen Breite etwas geringer ist als die lichte Breite der vom ersten Kleberteilstrang 102 begrenzten Mulde 104. Beim Einsetzen der Scheibe 101 gelangt die vorstehende Oberfläche 108 des Wulstes 107 zunächst mit der Oberfläche der Folie 105, die den zweiten Kleberteilstrang 103 abdeckt, in Kontakt. Beim Anpressen der Scheibe verformt der Wulst 107 die Folie 105, die sich infolge der plastischen Konsistenz des zweiten Kleberteilstranges 103 um den Wulst 107 herum anschmiegt.

Beim Eintauchen des Wulstes 107 in die Mulde 104 wird der in letzterer befindliche, plastische, zweite Kleberteilstrang teilweise aus der Mulde 104 herausverdrängt und umgibt, wie aus Fig. 12 ersichtlich ist, den gesamten Wulstbereich 107 des Rahmens 106.

Die Folie 105 ist vorzugsweise aus einem Kunststoffmaterial hergestellt, das mit dem Material des zweiten Kleberteilstranges 103 chemisch kompatibel ist.

Wenn die Folie 105 vollflächig auf dem zweiten Kleberteilstrang 103 aufliegt, ist dieser weitgehend vor Umwelteinflüssen wie Luftfeuchtigkeit, UV-Strahlung, Verschmutzung usw. geschützt. Ein Entfernen der Folie 105 beim Einsetzen der Scheibe erübrigt sich, da die Breite des Wulstes 107 etwas geringer bemessen ist als die Breite der Mulde 104 ; dadurch stehen an den Seitenwänden des Wulstes 107 genügend grosse Kontaktflächen für den aus der Mulde 104 verdrängten Montagekleber, gebildet durch den zweiten, plastischen Kleberteilstrang 103, zur Verfügung.

In den Fig. 13 und 14 ist ein weiteres Ausführungsbeispiel des Erfindungsgegenstandes dargestellt, bei welchem das Abdeckorgan für den zweiten Kleberteilstrang 113 durch einen starren, flächigen Körper 115 gebildet ist. Der erste, profilierte Kleberteilstrang 112 besitzt wiederum im wesentlichen U-förmige Querschnittsgestalt, ist jedoch entlang seiner oberen Kanten 119 mit gegeneinander gerichteten, vorstehenden Rippen 120 versehen. Der als Abdeckorgan für den zweiten, plastischen Kleberteilstrang 113 dienende, flächige Körper 115 besitzt eine etwas geringere Breite als die Breite der durch den ersten Kleberteilstrang 112 begrenzten Mulde 114. Dadurch ist beidseitig des Abdeckorganes 115 je ein Durchtritt geschaffen, der die Verdrängung des zweiten, plastischen Kleberteilstranges 113 aus der Mulde 114 gestattet, wenn die Scheibe 111 in den Rahmen 116 eingesetzt wird.

In ähnlicher Weise wie im Zusammenhang mit den Fig. 11 und 12 beschrieben besitzt der Rahmen 116 einen vorstehenden Wulst 117, der während der Montage der Scheibe mit seiner freien Oberfläche auf das Abdeckorgan 115 aufzuliegen kommt. Beim zunehmenden Einpressen der Scheibe 111 wird das Abdeckorgan 115 gegen den Grund der Mulde 114 verschoben, wobei eine gewisse Menge des als Montagekleber dienenden, zweiten Kleberteilstranges aus der Mulde 114 verdrängt wird. Diese Situation ist in Fig. 14 dargestellt.

Im Ruhezustand, gemäss Fig. 13, ist der zweite Kleberteilstrang 113 durch das Zusammenwirken des Abdeckorganes 115 mit den vorstehenden Rippen 120 vollständig bedeckt. Auch in diesem Fall erübrigt sich ein Entfernen des Abdeckorganes 115, da entlang den Seitenwänden des Wulstes 117 und an den angrenzenden Oberflächenbereichen des Rahmens 116 genügend Fläche zur Ausbildung einer Haftverbindung zwischen Rahmen 116 und Kleberteilstrang 113 zur Verfügung steht.

In beiden Fällen, d.h. bei der Ausführung gemäss Fig. 11 und 12 wie auch bei der Ausführung gemäss Fig. 13 und 14, ist die Höhe des Wulstes 107 bzw. 117 zumindest gleich oder grösser als die Dicke des in der Mulde 104 bzw. 114 aufgenommenen Kleberteilstranges 103 bzw. 113, um ein genügendes Verdrängen des letzteren aus der Mulde 104 bzw. 114 zu gewährleisten. Bei der Ausführung gemäss Fig. 13 und 14 ist die Breite des Wulstes 117 zweckmässigerweise deutlich geringer als die Breite der Mulde 114, um ein leichteres Verdrängen des plastischen Montageklebers in Form des zweiten Kleberteilstranges 113 aus der Mulde 114 heraus zu ermöglichen.

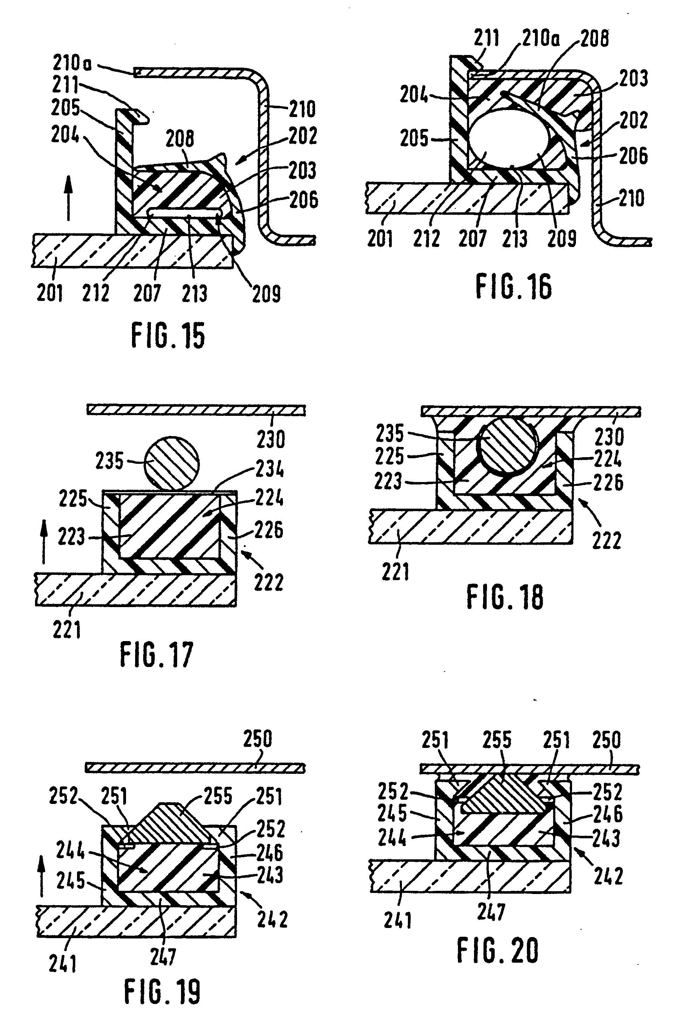

Als weiteres Ausführungsbeispiel ist in der Fig. 15 wiederum ausschnittweise ein Randbereich einer vorgefertigten, zum Einbau vorbereiteten Scheibe 201 dargestellt. Die Scheibe 201 ist entlang ihres Randes mit einem profilierten Kleberteilstrang versehen, der generell mit 202 bezeichnet ist. Dieser kann, wie schon vorher erwähnt, ebenfalls aus einer ausgehärteten Polyurethan-Klebedichtungsmasse bestehen, welche gegebenenfalls unter Zwischenschaltung einer (nicht dargestellten) Primerschicht auf der Scheibe 201 haftet. Der Kleberteilstrang 202 befindet sich in ausreagiertem Zustand und ist bezüglich des Materials so gewählt, dass er bis zu einem gewissen Grad elastisch, nicht jedoch plastisch verformbar ist.

Der erste, profilierte Kleberteilstrang 201 begrenzt im weitesten Sinne, im Ruhezustand, d.h. bei nicht eingebauter Scheibe 201, einen Hohlraum 204, der zur Aufnahme eines zweiten Kleberteilstranges 203 bestimmt ist. Dieser zweite Kleberteilstrang 203 ist jedenfalls noch plastisch verformbar und, je nach gewähltem Material, gegebenenfalls aktivierbar, um als eigentlicher Montagekleber zu dienen. Wesentlich ist auch in diesem Fall, dass die Materialien einerseits des ersten Kleberteilstranges 202 und andererseits des zweiten Kleberteilstranges 203 chemisch kompatibel sind.

Im Ausführungsbeispiel gemäss Fig. 15 begrenzt der erste Kleberteilstrang 202 einen im Querschnitt etwa rechteckigen Hohlraum 204, in welchem der zweite Kleberteilstrang 203 aufgenommen ist. Der Hohlraum 204 ist im Ruhezustand, d.h. bei nicht eingeklebter Scheibe 201, zumindest annähernd verschlossen. Zu diesem Zweck weist der erste Kleberteilstrang 202 eine erste Seitenwand 205, eine zweite Seitenwand 206 und einen Basisteil 207 auf ; diese Teile 205, 206 und 207 begrenzen eine im wesentlichen U-förmige Mulde. Dieser Hohlraum 204 ist durch einen Abdecksteg 208 verschlossen ; der Abdecksteg 208 ist vorzugsweise einstückig an der oberen, freien Kante der zweiten Seitenwand 206 des Hohlraumes 204 angeformt und elastisch verformbar. Auf diese Weise ist der im Hohlraum 204 befindliche, zweite Kleberteilstrang weitgehend vor Umwelteinflüssen, d.h. Luftfeuchtigkeit, UV-Strahlung, Verschmutzung und dgl. geschützt.

Der erste Kleberteilstrang 202 ist mit einem Verdrängungskörper ausgerüstet, in den Fig. 15 und 16 generell mit 209 bezeichnet, der beim Einkleben der Scheibe 201 in einen Rahmen, Flansch 210 oder dgl. den im Hohlraum 204 befindlichen, zweiten Kleberteilstrang 203 zumindest teilweise aus diesem herauszupressen befähigt ist.

Beim in den Fig. 15 und 16 dargestellten Ausführungsbeispiel ist die eine Seitenwand 205 höher als die gegenüberliegende Seitenwand 206, die den Abdecksteg 208 trägt. Zudem ist die höhere Seitenwand 205 entlang ihrer freien Oberkante mit einer gegen die zweite Seitenwand 206 vorstehenden Rippe 211 versehen. Wie aus Fig. 16 deutlich zu sehen ist, erlaubt diese Massnahme eine örtlich genau definierte Positionierung der Scheibe 201 bezüglich des Rahmens bzw. Flansches 210.

Beim Ausführungsbeispiel gemäss Fig. 15 und 16 ist der generell mit 209 bezeichnete Verdrängungskörper durch einen Schlauch 212 gebildet, der im Ruhezustand, bei nicht eingeklebter Scheibe 201, in plattem Zustand und innerhalb des Hohlraumes 204, vorzugsweise auf dem Basisteil 207 aufliegend, angeordnet ist. Wesentlich ist, dass der platte Schlauch 212 unterhalb bzw. entfernt vom Abdecksteg 208 liegt.

In an sich bekannter Weise kann der Schlauch 212 mit einem in diesen eingelegten Aufreissfaden oder -draht 213 versehen sein, der ein Auftrennen der ausreagierten Klebermasse 202 bzw. 203 und damit ein leichtes Entfernen der eingebauten Scheibe gestattet.

In der Fig. 15 ist die Scheibe in nicht-eingebautem Ruhezustand dargestellt ; der Rahmen bzw. Flansch 210, mit dem die Scheibe 201 zu verkleben ist, befindet sich im Abstand vom ersten, profilierten Kleberteilstrang 202. Für den Einbau der Scheibe stehen zwei Möglichkeiten zur Wahl :

1.	Vor dem Einbau der Scheibe 201 wird der Schlauch 212 mit Druckluft gefüllt, so dass sich dieser ausdehnt, dabei einen namhaften Teil des im Hohlraum 204 befindlichen, plastischen, zweiten Kleberteilstranges 203 aus dem Hohlraum 204 verdrängt und gleichzeitig den elastischen Abdecksteg 208 im Sinne einer elastischen Verschwenkung verformt. Dadurch steht ausserhalb des Hohlraumes 204 eine genügende Masse von als Montagekleber dienendem Anteil des zweiten Kleberteilstranges 203 zur Verfügung, so dass die Scheibe 201 derart in den Rahmen, Flansch 210 oder dgl. eingesetzt werden kann, bis die Rippe 211 die Kante 210a des Rahmens bzw. Flansches 210 übergreift.

2.	Eine andere Moglichkeit besteht darin, die Scheibe 201 im Zustand gemäss Fig. 15, d.h. bei nicht aktiviertem Verdrängungskörper 209, in den Rahmen bzw. Flansch 210 einzusetzen, bis dessen Kante 210a die Rippe 211 untergreift. Anschliessend wird der Verdrängungskörper 209 in Form des platten Schlauches 212 durch Einblasen von Druckluft expandiert, so dass der plastische, zweite Kleberteilstrang 203 aus dem Hohlraum 204 zumindest teilweise austritt und den Zwischenraum zwischen dem nun elastisch verformten Abdecksteg 208 und dem benachbarten Teil des Rahmens bzw. Flansches 210 ausfüllt.

In beiden Fällen wird die in Fig. 16 gezeigte Situation eintreten, d.h. der Rahmen bzw. Flansch 210 wird über den als Montagekleber dienenden, zweiten Kleberteilstrang 203 und den bereits ausgehärteten, ersten Kleberteilstrang 202 mit der Scheibe 201 verbunden.

Ein weiteres Ausführungsbeispiel des Erfindungsgegenstandes ist in den Fig. 17 und 18 dargestellt. In diesem Fall bildet der auf die Scheibe 221 voraufgebrachte, erste, profilierte Kleberteilstrang 222 eine im wesentlichen U-förmige Wanne, die einen oben offenen Hohlraum 224 begrenzt. Die beiden Seitenwände 225 und 226 des ersten Kleberteilstranges 222 sind durch eine haftend auf den Oberkanten der Seitenwände 225 und 226 angebrachte Folie 234 derart miteinander verbunden, dass der Hohlraum 224 dicht abgeschlossen ist. Im Inneren des Hohlraumes 224 ist der plastische, zweite Kleberteilstrang 223 aufgenommen, der als eigentlicher Montagekleber dient.

Die Folie 234 ist ferner an ihrer Aussenseite mit einem Verdrängungskörper 235 versehen, der über die Höhe des ersten Kleberteilstranges 222 vorsteht. Vorzugsweise ist der Verdrängungskörper 235 im Querschnitt kreisrund ausgebildet, wobei dessen Durchmesser geringer ist als die lichte Breite des mit dem zweiten Kleberteilstrang 223 gefüllten Hohlraumes 224.

Bei der Montage der Scheibe 221 in einem Rahmen bzw. an einem Flansch 230 gelangt zunächst der Verdrängungskörper 235 gegen die Oberfläche des Rahmens bzw. Flansches 230 in Anlage. Beim weitergehenden Andrücken der Scheibe 221 wird der Verdrängungskörper 235 in das Innere des Hohlraumes 224 hineingepresst, löst dabei die Randkanten der Folie 234, die sich um den Verdrängungskörper 235 herumlegt, und verdrängt einen Teil des im Hohlraum 224 befindlichen, plastischen, zweiten Kleberteilstranges 223, der als eigentlicher Montagekleber dient. Diese Situation ist in Fig. 18 dargestellt. Es erübrigt sich daher, die Abdeckfolie 234 vor der Montage der Scheibe 221 im Rahmen bzw. Flansch 230 zu entfernen. Vorzugsweise besteht die Folie 234 aus einem Material, das mit dem Material des zweiten Kleberteilstranges 223 chemisch kompatibel ist.

Ein weiteres Ausführungsbeispiel des Erfindungsgegenstandes ist in den Fig. 19 und 20 dargestellt. Wiederum ist die Scheibe 241 mit einem ausgehärteten, profilierten, ersten Kleberteilstrang 242 versehen, der, ähnlich wie in den Fig. 17 und 18, im wesentlichen U-förmige Gestalt besitzt und zwei Seitenwände 245 und 246 aufweist, die zusammen mit einem Basisteil 247 einen Hohlraum 244 in Form einer wannenartigen Mulde begrenzen. Die oberen Kanten der beiden Seitenwände 245 und 246 sind je mit gegeneinander gerichteten Rippen 251 versehen.

Die oben offene Mulde 244 ist mit dem als Montagekleber dienenden, plastischen, zweiten Kleberteilstrang 243 gefüllt und mittels eines Verdrängungskörpers 255 verschlossen.

Der Verdrängungskörper 255 besitzt im Querschnitt im wesentlichen dreieckige Gestalt und steht über die Höhe der beiden Seitenwände 245 und 246 vor. Damit ein Austreten des plastischen, zweiten Kleberteilstranges 243 ermöglicht wird, wenn der Verdrängungskörper 255 in den Hohlraum 244 hineinbewegt wird, liegt der Verdrängungskörper 255 bezüglich der Breite der freien Oberfläche des zweiten Kleberteilstranges 243 nur auf einem zentralen Teil dieser Oberfläche auf. Ein im wesentlichen dichtes Abschliessen des Hohlraumes 244 ist durch die vorstehenden Rippen 251 dennoch gewährleistet, so dass der plastische, zweite Kleberteilstrang 243 vor Umwelteinflüssen wie Luftfeuchtigkeit, UV-Strahlung, Verschmutzung und dgl. geschützt ist.

Unter Umständen können die beiden Seitenwände 245 und 246 mit unterhalb der Rippen 251 angeordneten, gegen das Innere des Hohlraumes 244 vorstehenden Stützrippen 252 versehen sein, welche den Verdrängungskörper 255 in seiner Ruhelage halten und damit zum dichten Verschluss des Hohlraumes 244, in welchem der zweite, plastische Kleberteilstrang 243 aufgenommen ist, beitragen. Diese Rippen 252 sind vorzugsweise einstückig an den Seitenwänden 245 und 246 angeformt und von elastischer Konsistenz.

Beim Einsetzen der Scheibe 241 in den Rahmen bzw. Flansch 250 gelangt zunächst dessen Oberfläche gegen die obere Kante des Verdrängungskörpers 255 ; bei zunehmendem Druck wird der Verdrängungskörper 255 in den Hohlraum 244 hineinbewegt und verdrängt derart zumindest einen Teil des darin befindlichen, als Montagekleber dienenden, plastischen, zweiten Kleberteilstranges 243. Dieser tritt, wie in Fig. 20 gezeigt, aus dem Hohlraum 244 aus und gewährleistet über den ersten, profilierten Kleberteilstrang 242 eine innige Verbindung zwischen Rahmen bzw. Flansch 250 und Scheibe 241. Die Stützrippen 252 werden dabei elastisch verformt und gleiten an den Seitenkanten des Verdrängungskörpers 255 vorbei, ohne eine weitere Funktion auszuüben.

Auch in diesem Fall ist gewährleistet, dass der als eigentlicher Montagekleber dienende, zweite, plastische Kleberteilstrang 243 bis zur Montage der Scheibe vor Umwelteinflüssen geschützt ist und dass keine, irgendwie gearteten Abdeckmittel entfernt werden müssen, bevor die Scheibe 241 montiert wird.

Die Herstellung der erfindungsgemässen Fahrzeugscheibe kann wie folgt geschehen :

Auf die gereinigte und gegebenenfalls mit einer Licht- und UV-undurchlässigen Randschicht versehene Scheibe 1, 11, 21, 31, 41, 101, 111, 201, 221 bzw. 241 wird zunächst eine Primerschicht aufgetragen und getrocknet. Danach wird mit einem bekannten Verfahren, das hier nicht näher diskutiert werden muss, der erste Kleberteilstrang 2, 12, 22, 32, 42, 102, 112, 202, 222 bzw. 242 in der erwünschten Profilierung aufextrudiert. Anschliessend wird der erste Kleberteilstrang ausgehärtet bzw. dessen Ausreaktion wird abgewartet. Dieser Vorgang kann dadurch unterstützt werden, dass nach dem Aufextrudieren eine Behandlung mit Wärme und-/oder Wasserdampf erfolgt, je nach verwendetem Material für den ersten Kleberteilstrang.

Nun kann der erste Kleberteilstrang, falls erforderlich, abgekühlt und/oder getrocknet werden, um optimale Verhältnisse für das anschliessende Einbringen des zweiten Kleberteilstranges 3, 13, 23, 33, 43, 103, 113, 203, 223 bzw. 243 zu schaffen. Dieser besteht, wie anschliessend noch erläutert werden wird, aus einem mit dem Material des ersten Kleberteilstranges 2, 12, 22, 32, 42, 102, 112, 202, 222 bzw. 242 chemisch kompatiblen, nicht-reagierten oder gegebenenfalls nachträglich aktivierbaren Material. Gegebenenfalls muss das Einbringen des zweiten Kleberteilstranges, z.B. im Fall des Ausführungsbeispiels gemäss Fig. 7 und 8 sowie namentlich im Fall des Ausführungsbeispiels gemäss Fig. 17 und 18 bzw. 19 und 20, in einer inerten Schutzgasatmosphäre erfolgen, um ein vorzeitiges Ausreagieren des Materials des zweiten Kleberteilstranges zu verhindern.

All diese Vorgänge finden zeitlich und örtlich getrennt von der eigentlichen Montage der Scheibe statt. Mit anderen Worten, die Scheibe kann montagefertig als autonomes Bauteil in einer optimierten Umgebung, mit ideal geeignetem Zeitablauf und unter besten Bedingungen soweit vorbereitet werden, dass unmittelbar vor der Montage lediglich noch gegebenenfalls der zweite Kleberteilstrang aktiviert werden muss. Die Verwendung eines eigentlichen Montageklebers, insbesondere das zeit- und arbeitsintensive Auftragen desselben, entfällt.

Als Material zur Ausbildung des ersten Kleberteilstranges 2, 12, 22, 32, 42, 102, 112, 202, 222 bzw. 242 eignet sich z.B. ein Polyurethansystem, und zwar sowohl ein feuchtigkeitshärtendes Einkomponentensystem als auch ein chemisch ausreagierendes Zweikomponentensystem. Diese Materialien härten, im Fall des Einkomponentensystems unter Zuhilfenahme einer Wasserdampfbehandlung, relativ schnell aus und bleiben in ausreagiertem Zustand elastisch.

Für den zweiten Kleberteilstrang 3, 13, 23, 33, 103, 113, 203, 223 bzw. 243 kommen verschiedene Materialien in Betracht :

### a. Oxidativ härtende Klebersubstanzen

Diese Substanzen müssen unter Luft- bzw. Sauerstoffabschluss gelagert werden, erfordern also zwingend eine Schutzfolie 39 (Fig. 7) bzw. ein Abdeckorgan 105, 115 bzw. ein Abdeckorgan 234, 255. Als Beispiel für solche Substanzen kann genannt werden : Ein Gemisch aus Polyurethan-Präpolymer mit endständigen Mercaptan-Gruppen und einem Oxydationsbeschleuniger, z.B. gemäss EP-A-0066167.

### b. Feuchtigkeitsreaktive Klebersubstanzen

Hier gelten sinngemäss die unter a. angeführten Bemerkungen. Als Beispiele für solche Substanzen können genannt werden :
— Polymercapto-Verbindungen + Erdalkaliperoxid im wasserfreien Zustand, z.B. gemäss US-A-3912696 oder US-A-3225017
— Polyurethan-Präpolymer mit endständigen Silangruppen, z.B. gemäss US-A-3632557 oder US-A-4222925
— Polyurethan-Präpolymer mit endständigen Isocyanat-Gruppen, z.B. gemäss US-A-3779794 oder EP-A-0040469
— Feuchtigkeitshärtende Silikonmassen, z.B. gemäss DE-C- 1255924 oder GB-A-992366
— Gemisch aus einem flexiblen Epoxidharz und einem polyfunktionellen Ketimin
— Gemisch aus einem flexiblen Epoxidharz und einem mit polyfunktionellem Amin beladenen Molekularsieb.

### c. Thermoplastische Klebersubstanzen

Diese als "Hotmelts" bezeichneten Klebersubstanzen sind bei Raumtemperatur fest und werden bei Erwärmung auf eine bestimmte Temperatur pastös bzw. flüssig. Nach dem Abkühlen gehen sie wieder in festen Zustand über. Dadurch, dass der erste Kleberteilstrang ein schlechter Wärmeleiter ist, wird die Verwendbarkeit solcher Klebersubstanzen begünstigt bzw. überhaupt erst ermöglicht. Der aktivierte (d.h. erwärmte) zweite Kleberteilstrang ist nämlich von der Scheibe thermisch isoliert und bleibt dadurch während genügend langer Zeit verarbeitungsfähig. Eine Abdeckung mittels Folie 39 bzw. Abdeckorgan 115 oder Abdecksteg 208 ist nicht unbedingt erforderlich, ausser eventuell zum Schutz gegen Verschmutzung oder mechanische Beschädigung. Als Beispiele für solche Substanzen können thermoplastische Polyurethan-Kautschuke genannt werden.

### d. Wärmehärtende Klebersubstanzen

Im wesentlichen gelten hier die gleichen Bemerkungen wie unter c. Sie unterscheiden sich aber dadurch dass sie bei Überschreiten einer kritischen Temperatur und anschliessender Abkühlung irreversibel in den festen Zustand übergehen. In der Praxis wird die Klebersubstanz zur Ausbildung des zweiten Kleberteilstranges auf eine erste Temperatur $T_1$ erwärmt, die unterhalb der kritischen Temperatur $T_2$ liegt, um ein Aufextrudieren auf den ersten Kleberteilstrang zu ermöglichen. Bei der Montage der Scheibe wird dann der zweite Kleberteilstrang über die kritische Temperatur $T_2$ hinaus erwärmt und wieder abgekühlt ; ein nachfolgendes, weiteres Erwärmen hat dann keine Zustandsänderung mehr zur Folge. Als Beispiele für solche Substanzen können genannt werden : Gemische aus einem Epoxidharz und einem $BF_3$-Amin-Komplex sowie hitzeaktivierbare Polyurethan-Klebersubstanzen.

### e. Langsam reagierende Zweikomponentensysteme

Durch entsprechende Wahl der chemischen Zusammensetzung können diese Systeme auf eine geeignete Offenzeit eingestellt werden. Sie können in all jenen Fällen angewendet werden, wenn eine längere Lagerung der Scheibe mit Sicherheit ausgeschlossen ist. Eine Abdeckung mit einer Folie oder einem Abdeckorgan ist, ausser zu mechanischem Schutz, nicht unbedingt erforderlich. Als Beispiel für solche Substanzen kann genannt werden : Gemische aus OH- und NCO-Gruppen enthaltenden Polyurethan-Präpolymeren.

In jedem Fall ist jedoch zu beachten, dass das für den zweiten Kleberteilstrang 3, 13, 23, 33, 43, 103, 113, 203, 223 bzw. 243 gewählte Material chemisch kompatibel ist zum Material des ersten, voraufgebrachten und ausreagierten Kleberteilstrang 2, 12, 22, 32, 42, 102, 112, 202, 222 bzw. 242, d.h. dass der zweite Kleberteilstrang nach dessen Aktivierung nicht nur am Rahmen, Flansch oder dgl., in den die Scheibe eingesetzt werden soll, sondern auch am ersten Kleberteilstrang einwandfrei haftet.

In der nachfolgenden Tabelle sind beispielsweise die wichtigsten Eigenschaften von einigen in Frage kommenden Materialien für den zweiten Kleberteilstrang angegeben. Es versteht sich, dass die Angaben in der Tabelle nur als grobe Richtwerte bzw. als Anhaltspunkte zu verstehen sind.

| SUBSTANZ | LAGERZEIT | AKTIVIERUNG | OFFENZEIT |
|---|---|---|---|
| a. | 2 - 6 Mte. | $O_2$-Kontakt nach Entfernen der Schutzfolie | 10 - 30 min |
| b. | 30 min bis 2 Wochen | Luftfeuchtigkeit | 10 - 30 min |
| c. | 6 - 12 Mte. | Wärme | 5 s - 1 min |
| d. | 6 - 12 Mte. | Wärme | 20 s - 3 min |
| e. | 30 - 180 min | ---- | 30 - 240 min |

## Patentansprüche

1. Vorgefertigte Fahrzeugscheibe (1 ; 11 ; 21 ; 31 ; 41 ; 101 ; 111 ; 201 ; 221 ; 241) für die Direktverglasung durch Einkleben in einen Rahmen, Flansch (8 ; 18 ; 28 ; 38 ; 48 ; 106 ; 116 ; 210 ; 230 ; 250) oder dgl., welche entlang ihres Randes einen ersten, gegebenenfalls über einer Primerschicht aufgebrachten, profilierten Kleberteilstrang (2 ; 12 ; 22 ; 32 ; 42 ; 102 ; 112 ; 202 ; 222 ; 242) aufweist, der elastisch, nicht jedoch plastisch verformbar ist und der mit einem zweiten, noch plastisch verformbaren oder gegebenenfalls aktivierbaren Kleberteilstrang (3 ; 13 ; 23 ; 33 ; 43 ; 103 ; 113 ; 203 ; 223 ; 243) aus einem mit dem ersten Kleberteilstrang chemisch kompatiblen Material versehen ist, dadurch gekennzeichnet, dass der erste Kleberteilstrang (2 ; 12 ; 22; 32 ; 42 ; 102 ; 112 ; 202 ; 222 ; 242) einen Hohlraum (4 ; 14 ; 24 ; 34 ; 44 ; 104 ; 114 ; 204 ; 224 ; 244) begrenzt, der zumindest weitgehend verschlossen ist und in welchem der zweite Kleberteilstrang (3 ; 13 ; 23 ; 33 ; 43 ; 103 ; 113 ; 203 ; 223 ; 243) aufgenommen ist, und dass Mittel vorgesehen sind, die beim Einsetzen der Scheibe in den genannten Hohlraum (4 ; 14 ; 24 ; 34 ; 44 ; 104 ; 114 ; 204 ; 224 ; 244) hineinbewegbar sind und dabei den darin befindlichen, zweiten Kleberteilstrang (3 ; 13 ; 23 ; 33 ; 43 ; 103 ; 113 ; 203 ; 223 ; 243) zumindest teilweise aus dem Hohlraum (4 ; 14 ; 24 ; 34 ; 44 ; 104 ; 114 ; 204 ; 224 ; 244) hinauspressen.

2. Fahrzeugscheibe nach Anspruch 1, dadurch gekennzeichnet, dass der erste Kleberteilstrang (2 ; 12 ; 22 ; 32 ; 42) einen zumindest annähernd geschlossenen Hohlraum (4 ; 14 ; 24 ; 34 ; 44) begrenzt und dass die Mittel zum Herauspressen des zweiten Kleberteilstranges (3 ; 13 ; 23 ; 33 ; 43) durch einen Teilbereich (5; 15 ; 25a, 25b ; 35a, 35b ; 45a, 45b) des ersten Kleberteilstranges (2 ; 12 ; 22 ; 32 ; 42) gebildet sind, der in den genannten Hohlraum (4 ; 14 ; 24 ; 34 ; 44) hineinbewegbar ist.

3. Fahrzeugscheibe nach Anspruch 2, dadurch gekennzeichnet, dass ein erster Teilbereich des ersten, profilierten Kleberteilstranges (2 ; 12 ; 22 ; 32 ; 42) eine im wesentlichen U- oder V-förmige Mulde (4 ; 14 ; 24; 34 ; 44) begrenzt, und dass mindestens ein weiterer Teilbereich (5 ; 15 ; 25a, 25b ; 35a, 35b ; 45a, 45b) des ersten Kleberteilstranges (2 ; 12 ; 22 ; 32 ; 42) entlang einer Kante (6 ; 16 ; 26a, 26b ; 36a, 36b ; 46a, 46b) elastisch bewegbar am genannten ersten Teilbereich des ersten Kleberteilstranges (2 ; 12 ; 22 ; 32 ; 42) angeordnet ist und die genannte U- oder V-förmige Mulde (4 ; 14 ; 24 ; 34 ; 44) im Ruhezustand zumindest annähernd verschliesst.

4. Fahrzeugscheibe nach Anspruch 3, dadurch gekennzeichnet, dass der elastisch bewegliche, weitere Teilbereich (5 ; 15) im Querschnitt im wesentlichen dreieckige Form besitzt, wobei die Spitze des Dreiecks über die genannte U- oder V-förmige Mulde (4 ; 14) hinausragt und wobei die gegenüberliegende Basis des Dreiecks die genannte U- oder V-förmige Mulde (4 ; 14) zumindest annähernd verschliesst.

5. Fahrzeugscheibe nach Anspruch 4, dadurch gekennzeichnet, dass der elastisch bewegliche weitere Teilbereich (15) einen entlang der freien Basiskante verlaufenden, sich in der Ebene der Basis des Querschnitts-Dreiecks erstreckenden Fortsatz (15a) aufweist.

6. Fahrzeugscheibe nach Anspruch 4, dadurch gekennzeichnet, dass die Begrenzungswand (10 ; 20) des Hohlraumes (4 ; 14), welche der mit dem elastisch beweglichen, weiteren Teilbereich (5 ; 15) versehenen Begrenzungswand (7 ; 17) gegenüberliegt, höher ist.

7. Fahrzeugscheibe nach Anspruch 6, dadurch gekennzeichnet, dass die Höhe der höheren Begrenzungswand (10 ; 20) etwa der Höhe des elastisch beweglichen, weiteren Teilbereiches (5 ; 15) entspricht.

8. Fahrzeugscheibe nach Anspruch 6, dadurch gekennzeichnet, dass die höhere Begrenzungswand (20) mit einer etwa in der Höhe der Basis des Querschnittsdreieckes des elastisch beweglichen, weiteren Teilbereichs (15) liegenden, sich gegen diesen erstreckenden, vorstehenden Rippe (20a) versehen ist.

9. Fahrzeugscheibe nach einem der Ansprüche 2 bis 8, dadurch gekennzeichnet, dass im Bereich derjenigen Kante des elastisch beweglichen, weiteren Teilbereichs (5 ; 15), in dem die genannte Spitze des Querschnitts-Dreiecks liegt, Einschnitte (9 ; 19) vorgesehen sind.

10. Fahrzeugscheibe nach Anspruch 9, dadurch gekennzeichnet, dass die Einschnitte (9 ; 19) durch parallel zur genannten Basis des Querschnitts-Dreiecks verlaufende Schlitze gebildet sind.

11. Fahrzeugscheibe nach Anspruch 2 dadurch gekennzeichnet dass ein erster Teilbereich des ersten, profilierten Kleberteilstranges (22 ; 32 ; 42) eine im wesentlichen U-förmige Mulde (24 ; 34 ; 44) begrenzt, und dass zwei weitere Teilbereiche (25a, 25b ; 35a, 35b ; 45a, 45b) des ersten Kleberteilstranges (22 ; 32 ; 42) entlang je einer Kante (26a, 26b ; 36a, 36b ; 46a, 46b) der beiden die Mulde (24 ; 34 ; 44) begrenzenden Seitenwände elastisch bewegbar am genannten ersten Teilbereich des ersten Kleberteilstranges angeordnet sind und die genannte U-förmige Mulde im Ruhezustand zumindest annähernd verschliessen.

12. Fahrzeugscheibe nach Anspruch 11, dadurch gekennzeichnet, dass die beiden elastisch bewegbaren, weiteren Teilbereiche je einen ersten, die U-förmige Mulde zumindest annähernd verschliessenden sowie je einen zweiten, sich über die Oberfläche der genannten U-förmigen Mulde hinaus erstreckenden Abschnitt besitzen.

13. Fahrzeugscheibe nach Anspruch 12, dadurch gekennzeichnet, dass die beiden genannten ersten Abschnitte elastisch bewegbar an den freien Oberkanten der die U-förmige Mulde begrenzenden Seitenwände des Teilbereichs des ersten Kleberteilstranges angeordnet sind.

14. Fahrzeugscheibe nach Anspruch 12 und 13, dadurch gekennzeichnet, dass die beiden genannten zweiten Abschnitte elastisch bewegbar an den freien Kanten der beiden genannten ersten Abschnitte angeordnet sind.

15. Fahrzeugscheibe nach Anspruch 12 und 13, dadurch gekennzeichnet, dass die beiden genannten zweiten Abschnitte elastisch bewegbar an den freien Oberkanten der die U-förmige Mulde begrenzenden Seitenwände des Teilbereichs des ersten Kleberteilstranges angeordnet sind.

16. Fahrzeugscheibe nach einem der Ansprüche 13 oder 15, dadurch gekennzeichnet, dass die beiden genannten ersten Abschnitte mittels einer Folie (40) miteinander verbunden sind, so dass die den zweiten Kleberteilstrang aufnehmende U-förmige Mulde vollständig verschlossen ist.

17. Fahrzeugscheibe nach Anspruche 16, dadurch gekennzeichnet, dass die Folie (40) haftend an den beiden genannten ersten Abschnitten befestigt ist und bei einer elastischen Verformung derselben abreisst.

18. Fahrzeugscheibe nach Anspruch 16, dadurch gekennzeichnet, dass die Folie (40) aus einem Material besteht, das mit dem Material des in der U-förmigen Mulde aufgenommenen zweiten Kleberteilstranges chemisch kompatibel ist.

19. Fahrzeugscheibe nach Anspruch 1, dadurch gekennzeichnet, dass der erste Kleberteilstrang (102 ; 112) einen einseitig offenen Hohlraum (104 ; 114) begrenzt, in welchem der zweite Kleberteilstrang (103 ; 113) aufgenommen ist, dass die freie Oberfläche des zweiten Kleberteilstranges (103 ; 113) mittels eines Abdeckorganes (105 ; 115) bedeckt ist, und dass der Rahmen, Flansch (106 ; 116) oder dgl. mindestens einen Teilbereich (107 ; 117) umfasst, der beim Einkleben der Scheibe (101 ; 111) in den genannten Hohlraum (104 ; 114) eindringt.

20. Fahrzeugscheibe nach Anspruch 19, dadurch gekennzeichnet, dass der zweite Kleberteilstrang (103) den durch den ersten Kleberteilstrang (102) gebildeten Hohlraum (104) nur teilweise ausfüllt.

21. Fahrzeugscheibe nach Anspruch 19 oder 20, dadurch gekennzeichnet, dass das Abdeckorgan (105 ; 115) unmittelbar auf der Oberfläche des zweiten Kleberteilstranges (103 ; 113) aufliegt.

22. Fahrzeugscheibe nach einem der Ansprüche 19 bis 21, dadurch gekennzeichnet, dass das Abdeckorgan eine flexible Folie (105) ist.

23. Fahrzeugscheibe nach Anspruch 22, dadurch gekennzeichnet, dass die Folie (105) auf der gesamten freien Oberfläche des zweiten Kleberteilstranges (103) aufliegt.

24. Fahrzeugscheibe nach Anspruch 22 oder 23, dadurch gekennzeichnet, dass die Folie (105) aus einem Material besteht, das mit dem Material des im einseitig offenen Hohlraum (104) aufgenommenen zweiten Kleberteilstranges (103) chemisch kompatibel ist.

25. Fahrzeugscheibe nach einem der Ansprüche 19 bis 21, dadurch gekennzeichnet, dass das Abdeckorgan ein starrer, flächiger Körper (115) ist.

26. Fahrzeugscheibe nach Anspruch 25, dadurch gekennzeichnet, dass der starre, flächige Körper (115) bezüglich der Breite der freien Oberfläche des zweiten Kleberstranges (113) nur auf einem zentralen Teil dieser Oberfläche aufliegt.

27. Fahrzeugscheibe nach Anspruch 25 oder 26, dadurch gekennzeichnet, dass die Seitenwände des den einseitig offenen Hohlraum (114) begrenzenden ersten Kleberteilstranges (112) entlang ihrer freien Oberkanten (119) mit gegeneinander gerichteten Rippen (120) versehen sind, welche die Kanten des starren, flächigen Körpers (115) übergreifen.

28. Fahrzeugscheibe nach einem der Ansprüche 19 bis 27, dadurch gekennzeichnet, dass der Rahmen, Flansch (106 ; 116) oder dgl. mit einem gegen das Abdeckorgan gerichteten Wulst (107 117) versehen ist, der beim Einkleben der Scheibe (101 ; 111) das als flexible Folie (105) ausgebildete Abdeckorgan verformt und in den ersten Kleberteilstrang (103) hineindrückt bzw. das als starrer, flächiger Körper (115) ausgebildete Abdeckorgan zumindest annähernd auf den Grund des einseitig offenen Hohlraumes (114) hinunterpresst.

29. Fahrzeugscheibe nach Anspruch 28, dadurch gekennzeichnet, dass die Höhe des Wulstes (107 ; 117) am Rahmen, Flansch (106 ; 116) oder dgl. zumindest gleich ist oder mehr beträgt als die Dicke des im einseitig offenen Hohlraum enthaltenen zweiten Kleberteilstranges (103 ; 113).

30. Fahrzeugscheibe nach Anspruch 28 oder 29, mit einer flexiblen Folie (105) als Abdeckorgan, dadurch gekennzeichnet, dass der Wulst durch einen Bug (107) im Rahmen, Flansch (106) oder dgl. gebildet ist, dessen Breite etwas geringer ist als die Breite des einseitig offenen Hohlraumes (104).

31. Fahrzeugscheibe nach Anspruch 28 oder 29, mit einem starren, flächigen Körper (115) als Abdeckorgan, dadurch gekennzeichnet, dass der Wulst durch einen Bug (117) im Rahmen, Flansch (116) oder dgl. gebildet ist, dessen Breite nur einen Teil der Breite des einseitig offenen Hohlraumes (114) beträgt.

32. Fahrzeugscheibe nach Anspruch 1, dadurch gekennzeichnet, dass der erste Kleberteilstrang (202 ; 222 ; 242) mindestens einen Verdrängungskörper (209 ; 235 ; 255) aufweist, der beim Einkleben der Scheibe (201 ; 221 ; 241) den im Hohlraum (204 ; 224 ; 244) befindlichen, zweiten Kleberteilstrang (203 ; 223 ; 243) zumindest teilweise aus diesem hinauspresst.

33. Fahrzeugscheibe nach Anspruch 32, dadurch gekennzeichnet, dass der vom ersten Kleberteilstrang (202) begrenzte Hohlraum (204) durch einen elastisch verformbaren Abdecksteg (208) verschlossen ist, der einstückig an der oberen, freien Kante der einen Seitenwand (206) des Hohlraumes (204) angeformt ist.

34. Fahrzeugscheibe nach Anspruch 33, dadurch gekennzeichnet, dass die gegenüberliegende Seitenwand (205) höher ist und entlang ihrer Kante eine gegen die genannte eine Seitenwand (206) vorstehende Rippe (211) aufweist.

35. Fahrzeugscheibe nach einem der Ansprüche 32 bis 34, dadurch gekennzeichnet, dass der Verdrängungskörper (209) durch ein im Volumen veränderliches, im Inneren des Hohlraumes (204) angeordnetes Element (212) gebildet ist.

36. Fahrzeugscheibe nach Anspruch 35, dadurch gekennzeichnet, dass der Verdrängungskörper (209) ein Schlauch (212) ist, der im Ruhezustand bei nicht eingeklebter Scheibe (201) platt ist.

37. Fahrzeugscheibe nach Anspruch 36, dadurch gekennzeichnet, dass der platte Schlauch (212) am Boden des Hohlraumes (204), unterhalb des zweiten Kleberteilstranges (203), angeordnet ist.

38. Fahrzeugscheibe nach einem der Ansprüche 35 bis 37, dadurch gekennzeichnet, dass im Inneren des Verdrängungskörpers (209) ein an sich bekannter Aufreissfaden oder -draht (213) angeordnet ist.

39. Fahrzeugscheibe nach Anspruch 32, dadurch gekennzeichnet, dass der vom ersten Kleberteilstrang (222) begrenzte Hohlraum (224) durch eine plastisch verformbare Folie (234) verschlossen ist.

40. Fahrzeugscheibe nach Anspruch 39, dadurch gekennzeichnet, dass die plastisch verformbare Folie (234) an ihrer Aussenseite mit einem Verdrängungskörper (235) versehen ist, der über die Höhe zumindest der einen den Hohlraum (224) zur Aufnahme des zweiten Kleberteilstranges (223) begrenzenden Seitenwand (225 bzw. 226) vorsteht.

41. Fahrzeugscheibe nach Anspruch 40, dadurch gekennzeichnet, dass der Verdrängungskörper (235) im Querschnitt kreisrund ist, wobei dessen Durchmesser geringer ist als die lichte Breite des mit dem zweiten Kleberteilstrang (223) gefüllten Hohlraumes (224).

42. Fahrzeugscheibe nach Anspruch 32, dadurch gekennzeichnet, dass der vom ersten Kleberteilstrang (243) begrenzte Hohlraum (244) durch einen Verdrängungskörper (255) verschlossen ist, der auf der Oberfläche des im Hohlraum (244) enthaltenen zweiten Kleberteilstranges (243) aufliegt.

43. Fahrzeugscheibe nach Anspruch 42, dadurch gekennzeichnet, dass der Verdrängungskörper (255) im Querschnitt im wesentlichen dreieckige Gestalt besitzt und über die Höhe zumindest der einen den Hohlraum (244) zur Aufnahme des zweiten Kleberteilstranges (243) begrenzenden Seitenwand (245 bzw. 246) vorsteht.

44. Fahrzeugscheibe nach Anspruch 42 oder 43, dadurch gekennzeichnet, dass der Verdrängungskörper (255) bezüglich der Breite der freien Oberfläche des zweiten Kleberstranges (243) nur auf einem zentralen Teil dieser Oberfläche aufliegt.

45. Fahrzeugscheibe nach Anspruch 44, dadurch gekennzeichnet, dass die Seitenwände des den Hohlraum (244) begrenzenden ersten Kleberteilstranges (243) entlang ihrer freien Oberkanten mit gegeneinander gerichteten Rippen (251) versehen sind, die die Seitenkanten des Verdrängungskörpers (255) übergreifen.

46. Fahrzeugscheibe nach Anspruch 44 oder 45, dadurch gekennzeichnet, dass die Seitenwände (245, 246) des den Hohlraum (244) begrenzenden ersten Kleberteilstranges (243) unterhalb ihrer freien Oberkanten mit gegen das Innere des Hohlraumes abstehenden Rippen (252) versehen sind, die den Verdrängungskörper (255) abstützen.

47. Fahrzeugscheibe nach einem der vorangehenden Patentansprüche, dadurch gekennzeichnet, dass der erste und/oder der zweite Kleberteilstrang aus Polyurethanmaterial bestehen bzw. besteht.

48. Fahrzeugscheibe nach einem der vorangehenden Patentansprüche, dadurch gekennzeichnet, dass der zweite Kleberteilstrang aus einer oxidativ härtenden Klebersubstanz besteht.

49. Fahrzeugscheibe nach einem der Patentansprüche 1 bis 47, dadurch gekennzeichnet, dass der zweite Kleberteilstrang aus einer feuchtigkeitshärtenden Klebersubstanz besteht.

50. Fahrzeugscheibe nach einem der Patentansprüche 1 bis 47, dadurch gekennzeichnet, dass der zweite Kleberteilstrang aus einer durch Wärmeeinwirkung aktivierbaren Klebersubstanz besteht.

51. Fahrzeugscheibe nach einem der Patentansprüche 1 bis 47, dadurch gekennzeichnet, dass der zweite Kleberteilstrang aus einer durch Wärmeeinwirkung aktivierbaren und irreversibel ausreagierenden Klebersubstanz besteht.

52. Fahrzeugscheibe nach einem der Patentansprüche 1 bis 47, dadurch gekennzeichnet, dass der zweite Kleberteilstrang aus einer langsam ausreagierenden Zweikomponenten-Klebersubstanz besteht.

53. Verwendung der vorgefertigten Fahrzeugscheibe nach einem oder mehreren der Patentansprüche 1 bis 52 als montagefertiges Bauteil zum Einbau in Fahrzeugkarosserien durch Einkleben, ohne Verwendung eines zusätzlichen Montageklebers.

## Claims

1. Prefabricated vehicle windscreen (1 ; 11 ; 21 ; 31 ; 41 ; 101 ; 111 ; 201 ; 221 ; 241) for direct glazing by sticking in a frame, flange (8 ; 18 ; 28 ; 38 ; 48 ; 106 ; 116 ; 210 ; 230 ; 250) or the like, which along its edge comprises a first, profiled partial strand of adhesive (2 ; 12 ; 22 ; 32 ; 42 ; 102 ; 112 ; 202 ; 222 ; 242), possibly applied over a primer coating, which strand is elastically, but not plastically deformable and which is provided with a second partial strand of adhesive (3 ; 13 ; 23 ; 33 ; 43 ; 103 ; 113 ; 203 ; 223 ; 243), which is still plastically deformable or may possibly be activated, consisting of a material which is chemically compatible with the first partial strand of adhesive, characterised in that the first partial strand of adhesive (2 ; 12 ; 22 ; 32 ; 42 ; 102 ; 112 ; 202 ; 222 ; 242) defines a cavity (4 ; 14 ; 24 ; 34 ; 44 ; 104 ; 114 ; 204 ; 224 ; 244), which is at least extensively closed and in which the second partial strand of adhesive (3 ; 13 ; 23 ; 33 ; 43 ; 103 ; 113 ; 203 ; 223 ; 243) is received, and that means are provided, which at the time of insertion of the windscreen can be moved into the said cavity (4 ; 14 ; 24 ; 34 ; 44 ; 104 ; 114 ; 204 ; 224 ; 244) and in this case press the second partial strand of adhesive (3 ; 13 ; 23 ; 33 ; 43 ; 103 ; 113 ; 203 ; 223 ; 243) located therein, at least partly out of the cavity (4 ; 14 ; 24 ; 34 ; 44 ; 104 ; 114 ; 204 ; 224 ; 244).

2. Vehicle windscreen according to Claim 1, characterised in that the first partial strand of adhesive (2 ; 12 ; 22 ; 32 ; 42) defines an at least approximately closed cavity (4 ; 14 ; 24 ; 34 ; 44) and that the means for pressing out the second partial strand of adhesive (3 ; 13 ; 23 ; 33 ; 43) are formed by a partial region (5 ; 15 ; 25a, 25b ; 35a, 35b ; 45a, 45b) of the first partial strand of adhesive (2 ; 12 ; 22 ; 32 ; 42), which can be moved into the said cavity (4 ; 14 ; 24 ; 34 ; 44).

3. Vehicle windscreen according to Claim 2, characterised in that a first partial region of the first, profiled partial strand of adhesive (2 ; 12 ; 22 ; 32 ; 42) defines a substantially U- or V-shaped hollow (4 ; 14 ; 24 ; 34; 44), and that along one edge (6 ; 16 ; 26a, 26b ; 36a, 36b ; 46a, 46b), at least one further partial region (5 ; 15; 25a, 25b ; 35a, 35b ; 45a, 45b) of the first partial strand of adhesive (2 ; 12 ; 22 ; 32 ; 42) is arranged to move elastically on the said first partial region of the first partial strand of adhesive (2 ; 12 ; 22 ; 32 ; 42) and in the inoperative state at least approximately closes the said U- or V-shaped hollow (4 ; 14 ; 24 ; 34; 44).

4. Vehicle windscreen according to Claim 3, characterised in that the elastically movable, further partial region (5 ; 15) has a substantially triangular shape in cross-section, the apex of the triangle projecting beyond the said U- or V-shaped hollow (4 ; 14) and the opposing base of the triangle at least approximately closing the said U- or V-shaped hollow (4 ; 14).

5. Vehicle windscreen according to Claim 4, characterised in that the elastically movable, further partial region (15) comprises an extension (15a) extending along the free base edge and extending in the plane of the base of the cross-sectional triangle.

6. Vehicle windscreen according to Claim 4, characterised in that the boundary wall (10 ; 20) of the cavity (4 ; 14), which lies opposite the boundary wall (7 ; 17) provided with the elastically movable, further partial region (5 ; 15), is higher.

7. Vehicle windscreen according to Claim 6, characterised in that the height of the higher boundary wall (10 ; 20) corresponds approximately to the height of the elastically movable, further partial region (5 ; 15).

8. Vehicle windscreen according to Claim 6, characterised in that the higher boundary wall (20) is provided with a projecting rib (20a) located approximately at the height of the base of the cross-sectional triangle of the elastically movable, further partial region (15), which rib (20a) extends towards the latter.

9. Vehicle windscreen according to one of Claims 2 to 8, characterised in that notches (9 ; 19) are provided in the region of that edge of the elastically movable, further partial region (5 ; 15), in which the said apex of the cross-sectional triangle lies.

10. Vehicle windscreen according to Claim 9, characterised in that the notches (9 ; 19) are formed by slots extending parallel to the said base of the cross-sectional triangle.

11. Vehicle windscreen according to Claim 2, characterised in that a first partial region of the first, profiled partial strand of adhesive (22 ; 32 ; 42) defines a substantially U-shaped hollow (24 ; 34 ; 44), and that along respectively one edge (26a, 26b ; 36a, 36b ; 46a, 46b) of the two side walls defining the hollow (24 ; 34 ; 44), two further partial regions (25a, 25b ; 35a, 35b ; 45a, 45b) of the first partial strand of adhesive (22 ; 32 ; 42) are arranged to move elastically on the said first partial region of the first partial strand of adhesive and in the inoperative state at least approximately close the said U-shaped hollow.

12. Vehicle windscreen according to Claim 11, characterised in that the two elastically movable, further partial regions each comprise a first section at least approximately closing off the U-shaped hollow as well as a second section respectively extending beyond the surface of the said U-shaped hollow.

13. Vehicle windscreen according to Claim 12, characterised in that the two said first sections are arranged to be elastically movable on the free upper edges of the side walls of the partial region of the first partial strand of adhesive defining the U-shaped hollow.

14. Vehicle windscreen according to Claims 12 and 13, characterised in that the two said second sections are arranged to be elastically movable on the free edges of the two said first sections.

15. Vehicle windscreen according to Claims 12 and 13, characterised in that the two said second sections are arranged to be elastically movable on the free upper edges of the side walls of the partial region of the first partial strand of adhesive defining the U-shaped hollow.

16. Vehicle windscreen according to one of Claims 13 or 15, characterised in that the two said first sections are connected to each other by means of a film (40), so that the U-shaped hollow receiving the second partial strand of adhesive is completely closed.

17. Vehicle windscreen according to Claim 16, characterised in that the film (40) is stuck to the two said first sections and tears off in the case of an elastic deformation thereof.

18. Vehicle windscreen according to Claim 16, characterised in that the film (40) consists of a material which is chemically compatible with the material of the second partial strand of adhesive received in the U-shaped hollow.

19. Vehicle windscreen according to Claim 1, characterised in that the first partial strand of adhesive (102; 112) defines a cavity (104 ; 114) open on one side, in which the second partial strand of adhesive (103 ; 113) is received, that the free surface of the second partial strand of adhesive (103 ; 113) is covered by means of a covering member (103 ; 115) and that the frame, flange (106 ; 116) or the like comprises at least one partial region (107 ; 117), which penetrates the said cavity (104 ; 114) at the time of sticking in the windscreen (101; 111).

20. Vehicle windscreen according to Claim 19, characterised in that the second partial strand of adhesive (103) only partly fills the cavity (104) formed by the first partial strand of adhesive (102).

15

21. Vehicle windscreen according to Claim 19 or 20, characterised in that the covering member (105 ; 115) rests directly on the surface of the second partial strand of adhesive (103 ; 113).

22. Vehicle windscreen according to one of Claims 19 to 21, characterised in that the covering member is a flexible film (105).

23. Vehicle windscreen according to Claim 22, characterised in that the film (105) rests on the entire free surface of the second partial strand of adhesive (103).

24. Vehicle windscreen according to Claim 22 or 23, characterised in that the film (105) consists of a material which is chemically compatible with the material of the second partial strand of adhesive (103) received in the cavity (104) open on one side.

25. Vehicle windscreen according to one of Claims 19 to 21, characterised in that the covering member is a rigid, flat member (115).

26. Vehicle windscreen according to Claim 25, characterised in that as regards the width of the free surface of the second adhesive strand (113), the rigid, flat member (115) rests solely on a central part of this surface.

27. Vehicle windscreen according to Claim 25 or 26, characterised in that the side walls of the first partial strand of adhesive (112) defining the cavity (114) open on one side, are provided along their free upper edges (119) with ribs (120) directed towards each other, which overlap the edges of the rigid, flat member (115).

28. Vehicle windscreen according to one of Claims 19 to 27, characterised in that the frame, flange (106; 116) or the like is provided with a bead (107 ; 117) directed towards the covering member, which at the time of sticking-in the windscreen (101 ; 111) deforms the covering member constructed as a flexible film (105) and presses into the first partial strand of adhesive (103) or presses down the covering member constructed as a rigid, flat member (115), at least approximately to the base of the cavity (114) open on one side.

29. Vehicle windscreen according to Claim 28, characterised in that the height of the bead (107 ; 117) on the frame, flange (106 ; 116) or the like is at least equal to or amounts to more than the thickness of the second partial strand of adhesive (103 ; 113) contained in the cavity open on one side.

30. Vehicle windscreen according to Claim 28 or 29, with a flexible film (105) as the covering member, characterised in that the bead is formed by a bend (107) in the frame, flange (106) or the like, whereof the width is somewhat smaller than the width of the cavity (104) open on one side.

31. Vehicle windscreen according to Claim 28 or 29, with a rigid flat member (115) as the covering member, characterised in that the bead is formed by a bend (117) in the frame, flange (116) or the like, whereof the width amounts to only part of the width of the cavity (114) open on one side.

32. Vehicle windscreen according to Claim 1, characterised in that the first partial strand of adhesive (202; 222 ; 242) comprises at least one displacement member (209 ; 235 ; 255), which at the time of sticking-in the windscreen (201 ; 221 ; 241) presses the second partial strand of adhesive (203 ; 223 ; 243), located in the cavity (204 ; 224 ; 244) at least partly out of the latter.

33. Vehicle windscreen according to Claim 32, characterised in that the cavity (204) defined by the first partial strand of adhesive (202) is closed by an elastically deformable covering web (208), which is formed integrally in one piece on the upper, free edge of one side wall (206) of the cavity (204).

34. Vehicle windscreen according to Claim 33, characterised in that the opposing side wall (205) is higher and along its edge comprises a rib (211) projecting towards the said one side wall (206).

35. Vehicle windscreen according to one of Claims 32 to 34, characterised in that the displacement member (209) is formed by a member (212) of variable volume, disposed inside the cavity (204).

36. Vehicle windscreen according to Claim 35, characterised in that the displacement member (209) is a flexible tube (212), which in the inoperative state, when the windscreen (201) is not stuck in, is flat.

37. Vehicle windscreen according to Claim 36, characterised in that the flat flexible tube (212) is disposed on the base of the cavity (204), below the second partial strand of adhesive (203).

38. Vehicle windscreen according to one of Claims 35 to 37, characterised in that a tear-off thread or wire (213) known per se is disposed inside the displacement member (209).

39. Vehicle windscreen according to Claim 32, characterised in that the cavity (224) defined by the first partial strand of adhesive (222) is closed by a plastically deformable film (234).

40. Vehicle windscreen according to Claim 39, characterised in that on its outer side, the plastically deformable film (234) is provided with a displacement member (235), which projects beyond the height at least of the one side wall (225) or (226) defining the cavity (224) for receiving the second partial strand of adhesive (223).

41. Vehicle windscreen according to Claim 40, characterised in that the displacement member (235) has a circular cross-section, its diameter being smaller than the inside width of the cavity (224) filled with the second partial strand of adhesive (223).

42. Vehicle windscreen according to Claim 32, characterised in that the cavity (244) defined by the first partial strand of adhesive (243) is closed by a displacement member (255), which rests on the surface of the second partial strand of adhesive (243) contained in the cavity (244).

43. Vehicle windscreen according to Claim 42, characterised in that in cross-section the displacement member (255) has a substantially triangular shape and projects beyond the height of at least one side wall (245 or 246) defining the cavity (244) for receiving the second partial strand of adhesive (243).

44. Vehicle windscreen according to Claim 42 or 43, characterised in that as regards the width of the free surface of the second adhesive strand (243), the displacement member (255) rests solely on a central part of this surface.

45. Vehicle windscreen according to Claim 44, characterised in that the side walls of the first partial strand of adhesive (243) defining the cavity (244) are provided along their free upper edges with ribs (251) directed towards each other, which overlap the side edges of the displacement member (255).

46. Vehicle windscreen according to Claim 44 or 45, characterised in that the side walls (245, 246) of the first partial strand of adhesive (243) defining the cavity (244) are provided below their free upper edges with ribs (252) projecting towards the inside of the cavity, which ribs support the displacement member (255).

47. Vehicle windscreen according to one of the preceding Patent Claims, characterised in that the first and/or the second partial strand of adhesive consist or consists of polyurethane material.

48. Vehicle windscreen according to one of the preceding Patent Claims characterised in that the second partial strand of adhesive consists of an adhesive substance which hardens by oxidation.

49. Vehicle windscreen according to one of Patent Claims 1 to 47, characterised in that the second partial strand of adhesive consists of an adhesive substance hardening under the action of moisture.

50. Vehicle windscreen according to one of Patent Claims 1 to 47, characterised in that the second partial strand of adhesive consists of an adhesive substance which can be activated by the action of heat.

51. Vehicle windscreen according to one of Patent Claims 1 to 47, characterised in that the second partial strand of adhesive consists of an adhesive substance which can be activated by the action of heat and reacts in an irreversible manner.

52. Vehicle windscreen according to one of Patent Claims 1 to 47, characterised in that the second partial strand of adhesive consists of a two-component adhesive substance which reacts slowly.

53. Use of the prefabricated vehicle windscreen according to one or more of Patent Claims 1 to 52 as a ready-to-assemble component for installation in vehicle bodies by sticking-in, without the use of an additional assembly adhesive.

**Revendications**

1. Vitre de véhicule préfabriquée (1 ; 11 ; 21 ; 31 ; 41 ; 101 ; 111 ; 201 ; 221 ; 241) à fixation directe par collage dans un cadre, une bride (8 ; 18 ; 28 ; 38 ; 48 ; 106 ; 116 ; 210 ; 230 ; 250) ou analogue, qui présente le long de son bord un premier cordon partiel de colle profilé (2 ; 12 ; 22 ; 32 ; 42 ; 102 ; 112 ; 202 ; 222 ; 242), éventuellement appliqué sur une couche de fond, qui est déformable élastiquement, mais pas plastiquement, et qui est pourvu d'un deuxième cordon partiel de colle (3 ; 13 ; 23 ; 33 ; 43 ; 103 ; 113 ; 203 ; 223 ; 243) encore plastiquement déformable ou éventuellement apte à être activé, composé d'un matériau chimiquement compatible avec le premier cordon partiel de colle, caractérisée en ce que le premier cordon partiel de colle (2 ; 12 ; 22 ; 32 ; 42 ; 102 ; 112 ; 202 ; 222 ; 242) délimite un espace creux (4 ; 14 ; 24 ; 34 ; 44 ; 104 ; 114 ; 204 ; 224 ; 244) qui est fermé au moins dans une large mesure et dans lequel est logé le deuxième cordon partiel de colle (3 ; 13 ; 23 ; 33 ; 43 ; 103 ; 113 ; 203 ; 223 ; 243), et qu'il est prévu des moyens qui peuvent se déplacer vers l'intérieur dans ledit espace creux (4 ; 14 ; 24 ; 34 ; 44 ; 104 ; 114 ; 204 ; 224 ; 244)lorsqu'on met la vitre en place, et font alors ressortir par pression, au moins partiellement, le deuxième cordon partiel de colle (3 ; 13 ; 23 ; 33 ; 43 ; 103 ; 113 ; 203 ; 223 ; 243) hors de l'espace creux (4 ; 14 ; 24 ; 34 ; 44 ; 104 ; 114 ; 204 ; 224 ; 244) dans lequel il se trouve.

2. Vitre de véhicule selon la revendication 1, caractérisée en ce que le premier cordon partiel de colle (2 ; 12 ; 22 ; 32 ; 42) délimite un espace creux (4 ; 14 ; 24 ; 34 ; 44) au moins presque fermé, et que les moyens pour faire sortir par pression le deuxième cordon partiel de colle (3 ; 13 ; 23 ; 33 ; 43) sont formés par une zone partielle (5 ; 15 ; 25a, 25b ; 35a, 35b ; 45a, 45b) du premier cordon partiel de colle (2 ; 12 ; 22 ; 32 ; 42), qui peut être déplacée à l'intérieur dudit espace creux (4 ; 14 ; 24 ; 34 ; 44).

3. Vitre de véhicule selon la revendication 2, caractérisée en ce qu'une première zone partielle du premier cordon partiel de colle profilé (2 ; 12 ; 22 ; 32 ; 42) délimite une cuvette (4 ; 14 ; 24 ; 34 ; 44) substantiellement en U ou en V, et qu'au moins une zone partielle supplémentaire (5 ; 15 ; 25a, 25b ; 35a, 35b ; 45a, 45b) du premier cordon partiel de colle (2 ; 12 ; 22 ; 32 ; 42), pouvant se déplacer élastiquement le long d'un bord (6 ; 16 ; 26a, 26b ; 36a, 36b ; 46a, 46b), est disposée le long de ladite première zone partielle du premier cordon partiel de colle (2 ; 12 ; 22 ; 32 ; 42) et, en position de repos, ferme au moins presque complètement ladite cuvette en U ou en V (4 ; 14 ; 24 ; 34 ; 44).

4. Vitre de véhicule selon la revendication 3, caractérisée en ce que la zone partielle supplémentaire (5 ; 15) élastiquement mobile présente, en coupe transversale, une forme essentiellement triangulaire, dans laquelle la pointe du triangle dépasse ladite cuvette en U ou en V (4 ; 14), et dans laquelle la base opposée du triangle ferme au moins presque complètement ladite cuvette en U ou en V (4 ; 14).

5. Vitre de véhicule selon la revendication 4, caractérisée en ce que la zone partielle supplémentaire (15) élastiquement mobile présente un prolongement (15a) passant le long du bord libre de la base et s'étendant dans le plan de la base du triangle en coupe transversale.

6. Vitre de véhicule selon la revendication 4, caractérisée en ce que la paroi de délimitation (10 ; 20) de l'espace creux (4 ; 14), qui est située en face de la paroi de délimitation (7 ; 17) pourvue de la zone partielle supplémentaire (5 ; 15) élastiquement mobile, est plus haute que ladite paroi de délimitation (7 ; 17).

7. Vitre de véhicule selon la revendication 6, caractérisée en ce que la hauteur de la paroi de délimitation la plus haute (10 ; 20) correspond approximativement à la hauteur de la zone partielle supplémentaire (5 ; 15) élastiquement mobile.

8. Vitre de véhicule selon la revendication 6, caractérisée en ce que la paroi de délimitation la plus haute (20) est pourvue d'une nervure saillante (20a), située approximativement au niveau de la base du triangle, en coupe transversale, de la zone partielle supplémentaire (15) élastiquement mobile, et s'étend le long de celle-ci.

9. Vitre de véhicule selon l'une des revendications 2 à 8, caractérisée en ce que des découpures (9 ; 19) sont prévues au niveau du bord de la zone partielle supplémentaire (5 ; 15) élastiquement mobile, dans laquelle est située ladite pointe du triangle en coupe transversale.

10. Vitre de véhicule selon la revendication 9, caractérisée en ce que les découpures (9 ; 19) sont formées par des fentes orientées parallèlement à ladite base du triangle en coupe transversale.

11. Vitre de véhicule selon la revendication 2, caractérisée en ce qu'une première zone partielle du premier cordon partiel de colle profilé (22 ; 32 ; 42) délimite une cuvette (24 ; 34 ; 44) substantiellement en U ou en V, et que deux autres zones partielles (25a, 25b ; 35a, 35b ; 45a, 45b) du premier cordon partiel de colle (22 ; 32 ; 42), pouvant se déplacer élastiquement le long d'un bord respectif (26a, 26b ; 36a, 36b ; 46a, 46b) des deux parois latérales délimitant la cuvette (24 ; 34 ; 44), sont disposées le long de ladite première zone partielle du premier cordon partiel de colle et, en position de repos, ferment au moins presque complètement ladite cuvette en U.

12. Vitre de véhicule selon la revendication 11, caractérisée en ce que les deux zones partielles supplémentaires, élastiquement mobiles, présentent chacune une première section fermant au moins presque complètement la cuvette en U, ainsi qu'une seconde section s'étendant au-delà de la surface de ladite cuvette en U.

13. Vitre de véhicule selon la revendication 12, caractérisée en ce que les deux sections dites premières sont disposées de façon élastiquement mobile le long des bords supérieurs libres des parois latérales, délimitant la cuvette en U, de la zone partielle du premier cordon partiel de colle.

14. Vitre de véhicule selon les revendications 12 et 13, caractérisée en ce que les deux sections dites secondes sont disposées de façon élastiquement mobile le long des bords libres des deux sections dites premières.

15. Vitre de véhicule selon les revendications 12 et 13, caractérisée en ce que les deux sections dites secondes sont disposées de façon élastiquement mobile le long des bords supérieurs libres des parois latérales, délimitant la cuvette en U, de la zone partielle du premier cordon partiel de colle.

16. Vitre de véhicule selon l'une des revendications 13 et 15, caractérisée en ce que les deux sections dites premières sont reliées ensemble au moyen d'une feuille (40) de sorte que la cuvette en U recevant le deuxième cordon partiel de colle est complètement fermée.

17. Vitre de véhicule selon la revendication 16, caractérisée en ce que la feuille (40) est fixée par adhérence sur les deux sections dites premières et est arrachée lors d'une déformation élastique desdites sections.

18. Vitre de véhicule selon la revendication 16, caractérisée en ce que la feuille (40) est formée d'un matériau qui est chimiquement compatible avec le matériau du deuxième cordon partiel de colle logé dans la cuvette en U.

19. Vitre de véhicule selon la revendication 1, caractérisée en ce que le premier cordon partiel de colle (102 ; 112) délimite un espace creux (104 ; 114) ouvert d'un côté, qui reçoit le deuxième cordon partiel de colle (103 ; 113), que la surface libre du deuxième cordon partiel de colle (103 ; 113) est recouverte au moyen d'un élément de recouvrement (105 ; 115), et que le cadre, la bride (106 ; 116) ou analogue entoure au moins une zone partielle (107 ; 117) qui pénètre dans ledit espace creux (104 ; 114) lors du collage de la vitre (101 ; 111).

20. Vitre de véhicule selon la revendication 19, caractérisée en ce que le deuxième cordon partiel de colle (103) remplit seulement partiellement l'espace creux (104) formé par le premier cordon partiel de colle (102).

21. Vitre de véhicule selon la revendication 19 ou 20, caractérisée en ce que l'élément de recouvrement (105 ; 115) est posé directement sur la surface du deuxième cordon partiel de colle (103 ; 113).

22. Vitre de véhicule selon l'une des revendications 19 à 21, caractérisée en ce que l'élément de recouvrement est une feuille souple (105).

23. Vitre de véhicule selon la revendication 22, caractérisée en ce que la feuille (105) est posée sur toute la surface libre du deuxième cordon partiel de colle (103).

24. Vitre de véhicule selon la revendication 22 ou 23, caractérisée en ce que la feuille (105) est formée d'un matériau qui est chimiquement compatible avec le matériau du deuxième cordon partiel de colle (103) logé dans l'espace creux (104) ouvert d'un côté.

25. Vitre de véhicule selon l'une des revendications 19 à 21, caractérisée en ce que l'élément de recouvrement est un corps rigide et plat (115).

26. Vitre de véhicule selon la revendication 25, caractérisée en ce que le corps rigide et plat (115), par rapport à la largeur de la surface libre du deuxième cordon partiel de colle (113), est posé seulement sur une partie centrale de cette surface.

27. Vitre de véhicule selon la revendication 25 ou 26, caractérisée en ce que les parois latérales du premier cordon partiel de colle (112), délimitant l'espace creux (114) ouvert d'un côté, sont pourvues le long de leur bord supérieur libre (119) de nervures (120) tournées l'une vers l'autre, qui empiètent sur les bords du corps rigide et plat (115).

28. Vitre de véhicule selon l'une des revendications 19 à 27, caractérisée en ce que le cadre, la bride (106 ; 116) ou analogue est pourvu(e) d'un renflement (107 ; 117), tourné vers l'élément de recouvrement, qui, lors du collage de la vitre (101 ; 111), déforme l'élément de recouvrement réalisé sous forme de feuille flexible (105) et le pousse par force dans le premier cordon partiel de colle (103) ou abaisse l'élément de recouvrement, réalisé sous forme de corps rigide et plat (115), au moins presque complètement au fond de l'espace creux (114) ouvert d'un côté.

29. Vitre de véhicule selon la revendication 28, caractérisée en ce que la hauteur du renflement (107 ; 117) du cadre, de la bride (106 ; 116) ou analogue est au moins égale, ou supérieure, à l'épaisseur du deuxième cordon partiel de colle (103 ; 113) contenu dans l'espace creux ouvert d'un côté.

30. Vitre de véhicule selon la revendication 28 ou 29, comportant une feuille souple (105) comme élément de recouvrement, caractérisée en ce que le renflement est formé par une avancée (107) du cadre, de la bride (106) ou analogue, dont la largeur est légèrement plus petite que la largeur de l'espace creux (104) ouvert d'un côté.

31. Vitre de véhicule selon la revendication 28 ou 29, comportant un corps rigide et plat (115) comme élément de recouvrement, caractérisée en ce que le renflement est formé par une avancée (117) du cadre, de la bride (116) ou analogue, dont la largeur équivaut seulement à une partie de la largeur de l'espace creux (114) ouvert d'un côté.

32. Vitre de véhicule selon la revendication 1, caractérisée en ce que le premier cordon partiel de colle (202 ; 222 ; 242) présente au moins un élément de déplacement (209 ; 235 ; 255) qui, lors du collage de la vitre (201 ; 221 ; 241), presse le deuxième cordon partiel de colle (203 ; 223 ; 243) au moins partiellement hors de l'espace creux (204 ; 224 ; 244) dans lequel il se trouve.

33. Vitre de véhicule selon la revendication 32, caractérisée en ce que l'espace creux (204) délimité par le premier cordon partiel de colle (202) est fermé par un montant de recouvrement (208) élastiquement déformable, qui est formé d'une seule pièce sur le bord supérieur libre d'une des parois latérales (206) de l'espace creux (204).

34. Vitre de véhicule selon la revendication 33, caractérisée en ce que la paroi latérale opposée (205) est plus haute et présente le long de son bord une nervure (211) en saillie par rapport à ladite paroi latérale (206).

35. Vitre de véhicule selon l'une des revendications 32 à 34, caractérisée en ce que l'élément de déplacement (209) est formé par un élément (212) à volume variable et disposé à l'intérieur de l'espace creux (204).

36. Vitre de véhicule selon la revendication 35, caractérisée en ce que l'élément de déplacement (209) est un tuyau souple (212) qui est aplati à l'état de repos quand la vitre (201) n'est pas collée.

37. Vitre de véhicule selon la revendication 36, caractérisée en ce que le tuyau souple aplati (212) est disposé au fond de l'espace creux (204), au-dessous du deuxième cordon partiel de colle (203).

38. Vitre de véhicule selon l'une des revendications 35 à 37, caractérisée en ce qu'un fil ou un fil d'acier de déchirage (213), connu en soi, est disposé à l'intérieur de l'élément de déplacement (209).

39. Vitre de véhicule selon la revendication 32, caractérisée en ce que l'espace creux (224) délimité par le premier cordon partiel de colle (222) est fermé par une feuille (234) plastiquement déformable.

40. Vitre de véhicule selon la revendication 39, caractérisée en ce que la feuille (234) plastiquement déformable est pourvue sur sa face externe d'un élément de déplacement (235) qui dépasse la hauteur au moins d'une des parois latérales (225 ou 226) délimitant l'espace creux (224) recevant le deuxième cordon partiel de colle (223).

41. Vitre de véhicule selon la revendication 40, caractérisée en ce que l'élément de déplacement (235) présente une coupe transversale de forme circulaire, dont le diamètre est plus petit que la largeur intérieure de l'espace creux (224) rempli du deuxième cordon partiel de colle (223).

42. Vitre de véhicule selon la revendication 32, caractérisée en ce que l'espace creux (244) délimité par le premier cordon partiel de colle (242) est fermé par un élément de déplacement (255) qui est posé sur la surface du deuxième cordon partiel de colle (243) contenu dans l'espace creux (244).

43. Vitre de véhicule selon la revendication 42, caractérisée en ce que l'élément de déplacement (255) présente, en coupe transversale, une forme essentiellement triangulaire et dépasse la hauteur au moins d'une des parois latérales (245 ou 246) délimitant l'espace creux (244) de réception du deuxième cordon partiel de colle (243).

44. Vitre de véhicule selon la revendication 42 ou 43, caractérisée en ce que l'élément de déplacement (255), par rapport à la largeur de la surface libre du deuxième cordon partiel de colle (243) est posé seulement sur une partie centrale de cette surface.

45. Vitre de véhicule selon la revendication 44, caractérisée en ce que les parois latérales du premier cordon partiel de colle (242) délimitant l'espace creux (244) sont pourvues, le long de leur bord supérieur libre, de nervures (251) tournées l'une vers l'autre, qui empiètent sur les bords latéraux de l'élément de déplacement (255).

46. Vitre de véhicule selon la revendication 44 au 45, caractérisée en ce que les parois latérales (245, 246) du premier cordon partiel de colle (242) délimitant l'espace creux (244) sont pourvues, au-dessous de leur bord supérieur libre, de nervures (252) s'écartant vers l'intérieur de l'espace creux, qui soutiennent l'élément de déplacement (255).

47. Vitre de véhicule selon l'une des revendications précédentes, caractérisée en ce que le premier et/ou le deuxième cordon partiel de colle est/sont formé(s) d'un matériau à base de polyuréthane.

48. Vitre de véhicule selon l'une des revendications précédentes, caractérisée en ce que le deuxième cordon partiel de colle est formé d'une substance collante durcissant par oxydation.

49. Vitre de véhicule selon l'une des revendications 1 à 47, caractérisée en ce que le deuxième cordon partiel de colle est formé d'une substance collante durcissant sous l'action de l'humidité.

50. Vitre de véhicule selon l'une des revendications 1 à 47, caractérisée en ce que le deuxième cordon partiel de colle est formé d'une substance collante pouvant être activée sous l'action de la chaleur.

51. Vitre de véhicule selon l'une des revendications 1 à 47, caractérisée en ce que le deuxième cordon partiel de colle est formé d'une substance collante pouvant être activée sous l'action de la chaleur et réagissant de façon irréversible.

52. Vitre de véhicule selon l'une des revendications 1 à 47, caractérisée en ce que le deuxième cordon partiel de colle est formé d'une substance collante à deux composants réagissant lentement.

53. Utilisation de la vitre de véhicule préfabriquée selon une ou plusieurs des revendications 1 à 52, comme élément prêt au montage, destiné à être mis en place dans des carrosseries de véhicules par collage, sans l'utilisation d'une colle de montage supplémentaire.

FIG.1

FIG. 2

FIG. 3

FIG.4

FIG.5

FIG.6

FIG. 7

FIG. 8

FIG. 9

FIG. 10

**FIG. 11**

**FIG. 12**

**FIG. 13**

**FIG. 14**

FIG.15

FIG.16

FIG.17

FIG.18

FIG.19

FIG.20

24